# EUROPEAN PATENT SPECIFICATION

(11) **EP 4 555 697 B1**
(45) Date of publication and mention of the grant of the patent: **30.09.2026**
(21) Application number: 22748231.2
(22) Date of filing: 15.07.2022
(51) Int. Cl.: H04L 65/1016, H04L 61/4588, H04L 65/1083

(54) **CORE NETWORK NODE, INTERNET PROTOCOL MULTIMEDIA SUBSYSTEM (IMS) NODES, AND METHODS THEREIN, IN A COMMUNICATIONS NETWORK**
KERNNETZWERKKNOTEN, INTERNETPROTOKOLL-MULTIMEDIA-SUBSYSTEM (IMS)-KNOTEN UND VERFAHREN DARIN IN EINEM KOMMUNIKATIONSNETZWERK
NOEUD DE RÉSEAU CENTRAL, NOEUDS DE SOUS-SYSTÈME MULTIMÉDIA DE PROTOCOLE INTERNET (IMS) ET PROCÉDÉS ASSOCIÉS DANS UN RÉSEAU DE COMMUNICATION

(43) Date of publication of application: 21.05.2025
(73) Proprietor: Telefonaktiebolaget LM Ericsson (publ), 164 83 Stockholm (SE)
(72) Inventor: CASTELLANOS ZAMORA, David, 28026 Madrid (ES); MERINO VAZQUEZ, Emiliano, 28916 Madrid (ES); RUIZ BALMASEDA, Cristina, 28290 Madrid (ES); CHEN, Ping, Shanghai 200335 (CN)
(74) Representative: Ericsson
(86) International application number: PCT/CN2022/105882
(87) International publication number: WO 2024/011555

(56) References cited:
- ERICSSON: "Common Network Exposure", vol. SA WG2, no. Electronic Meeting; 20200420 - 20200424, 18 June 2020 (2020-06-18), XP051900258, Retrieved from the Internet <URL:https://ftp.3gpp.org/3guInternal/3GPP_Ultimate_CRPacks/SP-200437.zip 23502_CR2178_(Rel-16)_S2-2002713-Common-network-exposure-23502-PA4.docx> [retrieved on 20200618]

## Description

### TECHNICAL FIELD

Embodiments herein relate to a Core network (CN) node, a first IMS node, a second IMS node, and methods therein. In some aspect they relate to handling a subscription of exposure of an IMS monitoring event in a communications network.

### BACKGROUND

In a typical wireless communication network, wireless devices, also known as wireless communication devices, mobile stations, stations (STA) and/or User Equipments (UE), communicate via a Local Area Network such as a Wi-Fi network or a Radio Access Network (RAN) to one or more core networks (CN). The RAN covers a geographical area which is divided into service areas or cell areas, which may also be referred to as a beam or a beam group, with each service area or cell area being served by a radio network node such as a radio access node e.g., a Wi-Fi access point or a radio base station (RBS), which in some networks may also be denoted, for example, a NodeB, eNodeB (eNB), or gNB as denoted in Fifth Generation (5G) telecommunications. A service area or cell area is a geographical area where radio coverage is provided by the radio network node. The radio network node communicates over an air interface operating on radio frequencies with the wireless device within range of the radio network node.

Specifications for the Evolved Packet System (EPS), also called a Fourth Generation (4G) network, have been completed within the 3rd Generation Partnership Project (3GPP) and this work continues in the coming 3GPP releases, for example to specify a 5G network also referred to as 5G New Radio (NR). The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access network wherein the radio network nodes are directly connected to the EPC core network rather than to RNCs used in 3G networks. In general, in E-UTRAN/LTE the functions of a 3G RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs. To compensate for that, the E-UTRAN specification defines a direct interface between the radio network nodes, this interface being denoted the X2 interface.

Multi-antenna techniques may significantly increase the data rates and reliability of a wireless communication system. The performance is in particular improved if both the transmitter and the receiver are equipped with multiple antennas, which results in a Multiple-Input Multiple-Output (MIMO) communication channel. Such systems and/or related techniques are commonly referred to as MIMO.

In addition to faster peak Internet connection speeds, the 5G aims at higher capacity than current 4G, allowing higher number of mobile broadband users per area unit, and allowing consumption of higher or unlimited data quantities in gigabyte per month and user. This would make it feasible for a large portion of the population to stream high-definition media many hours per day with their mobile devices, when out of reach of Wi-Fi hotspots. 5G research and development also aims at improved support of Machine to Machine (M2M) communication, also known as the Internet of things, aiming at lower cost, lower battery consumption and lower latency than 4G equipment.

IMS is a well-known 3GPP standard allowing sessions to be setup between two or more parties for a broad variety of services such as voice or video call, interactive messaging sessions or third-party specific applications.

3GPP Technical specification (TS) 23.501 and TS 23.502 define an architecture and procedures for exposure of capabilities of the 5G Core network (5GC).

This includes a Network Exposure Function (NEF) as a function within the 5GC in charge of securely expose network Function (NF) capabilities and events to Application Functions (AF)s external to the 5GC.

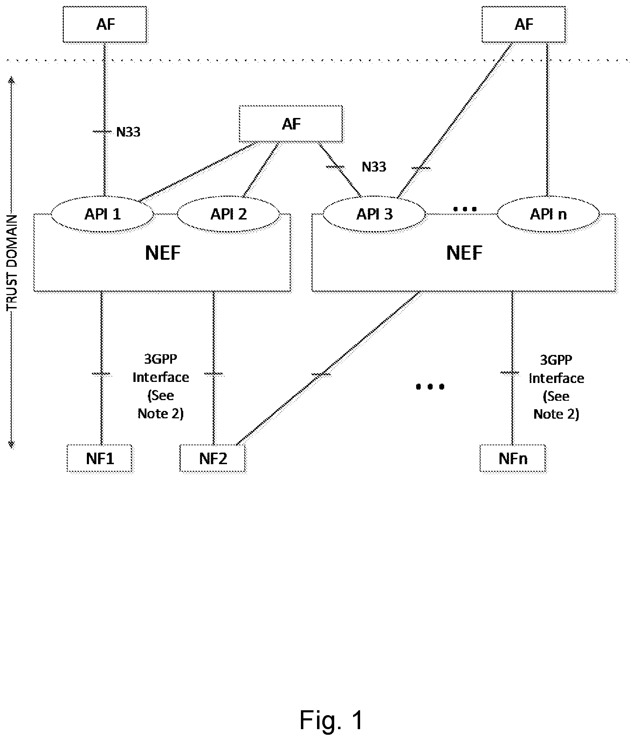

**Figure 1** depicts a Non-roaming architecture for NEF in reference point representation, comprising AFs inside and outside a trust domain, NFs, NEFs, Application Programming Interfaces (APIs) I

Within the Exposure architecture in 5GC, a Unified Data Management (UDM) also plays a relevant role to configure exposure monitoring events related to specific UEs or group of UEs. The UDM is responsible to authorize, store and configure the events to be monitored for the target UE at the corresponding serving nodes, e.g. an Access and Mobility Management Function (AMF), and a Session Management Function (SMF), where the UE may be served at any given time.

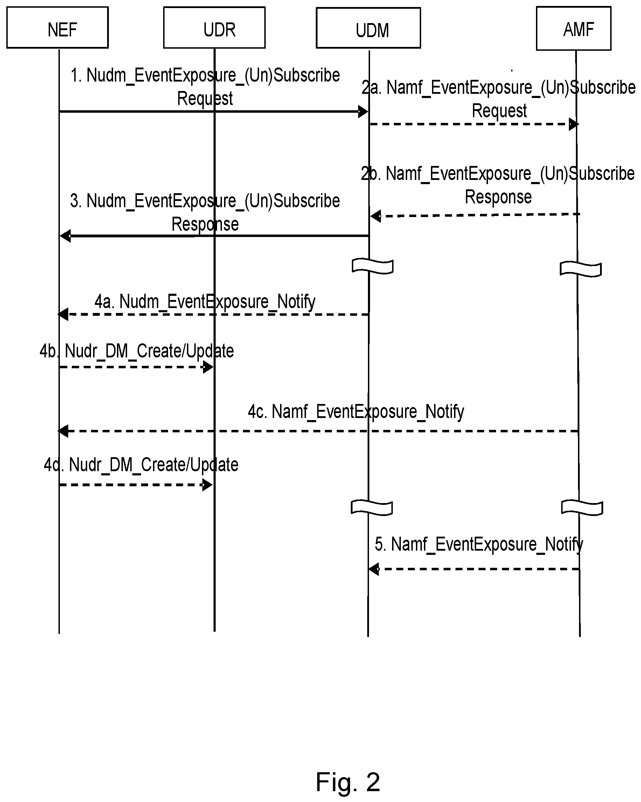

Figure 2 depicts UDM event exposure Subscribe, Unsubscribe and Notify operations referred to as Nudm_EventExposure_Subscribe, Unsubscribe and Notify operations. The exposure architecture in 5GC makes use of Service-Based Architecture (SBA) defined APIs to configure the exposure monitoring events and between AF, NEF, UDM and the rest of NFs within the 5GC. In figure 2:
**UDR** means Unified Data Repository

The 5GC exposure architecture is an evolution of a similar architecture as defined in EPC, that instead of the NEF, UDM uses vice Capability Exposure Function (SCEF) and Home Subscriber Server (HSS).

The IMS subsystem also supports certain exposure capabilities but using a completely different architecture and protocols based on 3GPP TS 3GPP 29.199 and Open Mobile Alliance (OMA) one API (oneAPI) specifications.

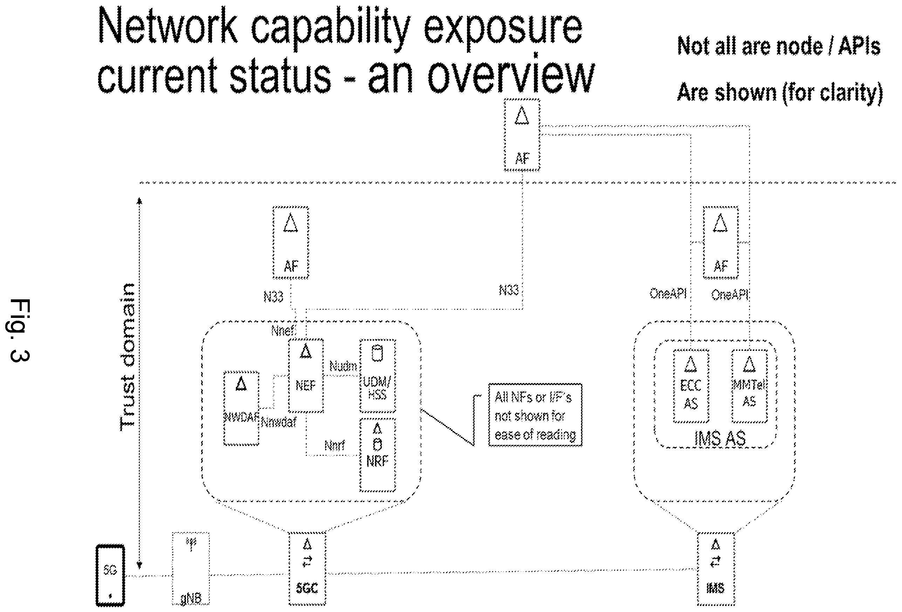

**Figure 3** depicts 5GC Exposure vs IMS Exposure Architectures. In Figure 3 it can be seen that UDM is the network function in charge of receiving and distributing the events towards the network functions detecting the event. This UDM role for 5GC events is similar to the HSS role for IMS events.. In Figure 3:
**NWDAF** means Network Data Analytics Function,
**UDM/HSS** means Unified Data Management/Home Subscriber Server
**N 33** means Naf_EventExposure.

Finally, there are certain SBA interactions within the IMS subsystem defined in 3GPP TS 23.228, e.g. between a Serving - Call Session Control Function (S-CSCF), IMS Application Server (AS) and HSS. In particular, there is an SBA service operation defined for the S-CSCF to register in HSS when a UE register in IMS.

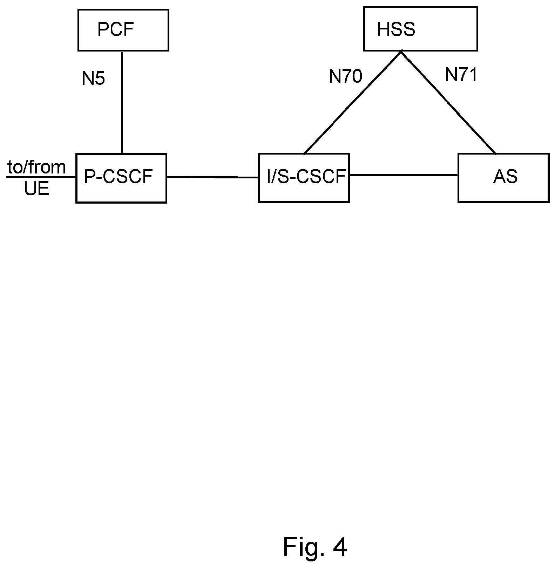

**Figure 4****:** depicts a system architecture to support SBA in IMS in a reference point representation. In Figure 4 it can be seen that HSS produces services (Nhss_ims) to be consumed by other IMS NFs, e.g. S-CSCF.. In Figure 4:
**P-CSCF** means Proxy Call Session Control Function,
**I/S-CSCF** means Interrogating/Serving Call Session Control Function,
**N5** means Npcf_interface between P-CSCF and PCF,
**N70** means Nhss interface between I/S-CSCF and HSS,
**N71** means Nhss interface between IMS-AS and HSS.

Ericsson: "Common network exposure", 3GPP draft, SP-200437, 18 June 2020, is a 3GPP contribution related to common network event exposure for EPC and 5GC. The contribution specifies a flow for common network event exposure via UDM. The NEF+SCEF indicates to the UDM that it requires the event reporting performed also by EPC domain, i.e. MME reporting via t6a interface, in addition to 5GC domain by requesting explicitly the monitoring in EPC.

### SUMMARY

As part of developing embodiments herein, the inventors have identified a problem that first will be discussed.

Although there are certain SBA interactions within the IMS subsystem defined in 3GPP TS 23.228, these do not cover interactions related to exposure of IMS user registration related capabilities like monitoring of specific events in the IMS system related to a user and/or subscription such as:
- IMS registration status, e.g. user is IMS Registered (REG), Unregistered (UNREG), REG for unreg services, ...,
- subscription adaption reporting, e.g. addition of new device, alias etc.,
- subscriber registered devices, e.g. Multi-X related and busy state of subscriber, return International Mobile station Equipment Identities (IMEls) etc.,
- subscriber Network Interface (NNI) breakout reporting, e.g. ongoing call state and NNI status,
- device capabilities e.g. Voice over IP (VoLTE), Short Message Service (SMS) over Internet Protocol (IP) (SMSoIP) and features supported,

These events may be reported by the S-CSCF and/or HSS-IMS which may be Service Based Interface (SBI) capable entities according to 3GPP TS 23.228.

As mentioned above OMA/Global System for Mobile Communications (GSM) Association (GSMA) has specified as part of the RESTful OneAPI suite of protocols an API for managing event subscriptions for Call Notifications, Call Direction Notifications and Media Interaction Notifications. However, these OMA APIs have not been evolved since 2013 and not all possible Use Cases (UCs), e.g. multi-device, are defined. Also these are only implemented by some IMS vendors.

In summary, there is currently no standard unified mechanisms in IMS, e.g., 3GPP TS 23.228, to manage exposure interactions similarly as in 5GC covering configuration and reporting of IMS user registration monitoring events.

An object of embodiments herein is to improve the performance of a communications network using exposure of IMS monitoring events.

According to an aspect of embodiments herein, the object is achieved by a method performed by a Core Network, CN, node. The method is for handling a subscription of exposure of an Internet protocol Multimedia System, IMS, monitoring event in a communications network. The CN node receives a request from a network node via a first Service Based Interface, SBI. The request requests for a subscription to expose an IMS monitoring event for a User Equipment, UE, in an IMS network. The request indicates a first ID identifying a type of the monitoring event, a second ID identifying the network node, and a third ID identifying the UE. The CN node sends to a first IMS node via a second SBI, the request for said subscription. The request indicates the first ID, the second ID, the third ID, and a fourth ID identifying the CN node. The CN node receives an acknowledgement . The acknowledgement relates to that the requested subscription is set up based on the first ID, the second ID, the third ID, and the fourth ID. The CN node sends the acknowledgement that the requested subscription is set up to the network node. The set up subscription enables the first IMS node to send an event report via the second SBI to the CN node, based on the fourth ID, when any event is detected that is related to the set up subscription, which event report is to be forwarded to the network node, via the first SBI.

According to another aspect of embodiments herein, the object is achieved by a method performed by a first Internet protocol Multimedia System, IMS, node. The methos is for handling a subscription of exposure of an IMS monitoring event in a communications network. The IMS node receives a request from a first Core Network, CN, node via a second Service Based Interface, SBI. The request is requesting a subscription to expose the IMS monitoring event for a User Equipment, UE, in an IMS network. The request is originating from a network node and indicates a first ID identifying a type of the monitoring event, a second ID identifying the network node, a third ID identifying the UE, and a fourth ID identifying the CN node. The IMS node sets up the requested subscription based on the first ID, the second ID, the third ID, and a fourth ID. The IMS node sends an acknowledgement that the requested subscription is set up to the CN node via the via the second SBI. The acknowledgement is to be forwarded to the network node. The setup subscription enables the first IMS node to send an event report via the second SBI to the CN node, based on the fourth ID, when any event is detected that is related to the setup subscription, which event report is to be forwarded to the network node, via a first SBI.

According to another aspect of embodiments herein, the object is achieved by a method performed by a second Internet protocol Multimedia System, IMS, node. The method is for handling a subscription of exposure of an IMS monitoring event in a communications network. The IMS node registers in a first IMS node for an IMS identity for a User Equipment, UE. The IMS node receives a second request from the first IMS node, requesting a subscription to expose the IMS monitoring event for the UE in an IMS network. The second request indicates a first ID identifying a type of the monitoring event, a third ID identifying the UE, and any one or more out of a fourth ID identifying a CN node, and a fifth ID identifying the first IMS node. The IMS node sets up the subscription according to the second request based on the indicated first ID, third ID, and any one or more out of the fourth ID, and a fifth ID. The IMS node sends to the first IMS node, an acknowledgement that the subscription according to the second request is set up. The setup subscription according to the second request enables the second IMS node to, when any event that is related to the setup subscription according to the second request is detected, send an event report to any one out of:
- By direct reporting to the CN node, via a third Service Based Interface, SBI, based on the fourth ID, and
- by indirect reporting to the CN node via the first IMS node, based on the fifth ID.

According to another aspect of embodiments herein, the object is achieved by a Core Network, CN, node configured to handle a subscription of exposure of an Internet protocol Multimedia System, IMS, monitoring event in a communications network. The CN node further configured to:
- Receive from a network node via a first Service Based Interface, SBI, a request for a subscription to expose an IMS monitoring event for a User Equipment, UE, in an IMS network, which request is adapted to indicate a first ID identifying a type of the monitoring event, a second ID identifying the network node, and a third ID identifying the UE,
- send to a first IMS node via a second SBI, the request for said subscription, which request is adapted to indicate the first ID, the second ID, the third ID and a fourth ID identifying the CN node,
- receive from the first IMS node via the second SBI, an acknowledgement that the requested subscription is set up based on the first ID, the second ID, the third ID, and the fourth ID,
- send to the network node, the acknowledgement that the requested subscription is set up. The set up subscription is adapted to enable the first IMS node to send an event report via the second SBI to the CN node based on the fourth ID, when any event is detected that is related to the set up subscription, which event report is to be forwarded to the network node via the first SBI.

According to another aspect of embodiments herein, the object is achieved by a first Internet protocol Multimedia System, IMS, node, configured to handle a subscription of exposure of an IMS monitoring event in a communications network. The IMS node is further configured to:
- Receive via a second Service Based Interface, SBI, a request from a Core Network, CN, node, requesting a subscription to expose the IMS monitoring event for a User Equipment, UE, in an IMS network, which request is adapted to be originating from a network node, which request is adapted to indicate a first ID identifying a type of the monitoring event, a second ID identifying the network node, a third ID identifying the UE, and a fourth ID identifying the CN node,
- set up the requested subscription based on the first ID, the second ID, the third ID, and a fourth ID,
- send to the CN node via the via the second SBI, an acknowledgement that the requested subscription is set up, which acknowledgement is to be forwarded to the network node. The setup subscription is adapted to enable the first IMS node to send an event report via the second SBI, to the CN node, based on the fourth ID, when an event is detected that is related to the setup subscription, which event report is to be forwarded to the network node via a first SBI.

According to another aspect of embodiments herein, the object is achieved by a second Internet protocol Multimedia System, IMS, node configured to handling a subscription of exposure of an IMS monitoring event in a communications network. The IMS node is further configured to:
- Register in a first IMS node for an IMS identity for a User Equipment, UE,
- receive a second request from the first IMS node requesting a subscription to expose the IMS monitoring event for the UE in an IMS network, which second request is adapted to indicate a first ID identifying a type of the monitoring event, a third ID identifying the UE, and any one or more out of: a fourth ID identifying a CN node, and a fifth ID identifying the first IMS node,

- set up the subscription according to the second request based on the indicated first ID, third ID, and any one or more out of: the fourth ID, and a fifth ID,
- send to the first IMS node, an acknowledgement that the subscription according to the second request is set up. The setup subscription according to the second request is adapted to enable the second IMS node to, when any event that is related to the setup subscription according to the second request is detected, send an event report to any one out of:
- by direct reporting to the CN node via a third Service Based Interface, SBI, based on the fourth ID, and
- by indirect reporting to the CN node via the first IMS node based on the fifth ID.

In this way, the CN node is used as a central point of exposure interactions between 3GPP defined network nodes, e.g. CN nodes, and IMS nodes. This results in an application domain can contribute to care for the support of exposure use cases in an IMS domain. This in turn results in an to improved performance of a communications network using exposure of IMS monitoring events.

Embodiments herein e.g. brings the following advantages of achieving IMS User Registration Related Monitoring Capabilities that may be configured and reported by using SBI interactions which uses an architecture similar to the one used in 5GC.

### BRIEF DESCRIPTION OF THE DRAWINGS

Examples of embodiments herein are described in more detail with reference to attached drawings in which:
- **Figure 1**: is a schematic block diagram illustrating prior art.
- **Figure 2**: is a schematic sequence diagram illustrating prior art.
- **Figure 3**: is a schematic block diagram illustrating prior art.
- **Figure 4**: is a schematic block diagram illustrating prior art.
- **Figure 5**: is a schematic block diagram illustrating embodiments of a communications network.
- **Figure 6**: is a flowchart depicting embodiments of a method in a CN node.
- **Figure 7**: is a flowchart depicting embodiments of a method in a first IMS node.
- **Figure 8**: is a flowchart depicting embodiments of a method in a second IMS node.
- **Figure 9**: is a schematic block diagram illustrating embodiments of a communications network.
- **Figure 10**: is a signaling diagram depicting embodiments of a method.
- **Figure 11a-b**: are schematic block diagrams illustrating embodiments of a CN node.
- **Figure 12a-b**: are schematic block diagrams illustrating embodiments of a first IMS node.
- **Figure 13a-b**: are schematic block diagrams illustrating embodiments of a second IMS node.
- **Figure 14**: schematically illustrates a telecommunication network connected via an intermediate network to a host computer.
- **Figure 15**: is a generalized block diagram of a host computer communicating via a base station with a user equipment over a partially wireless connection.
- **Figures 16-19**: are flowcharts illustrating methods implemented in a communication system including a host computer, a base station and a user equipment.

### DETAILED DESCRIPTION

Embodiments herein relate to a communications network and the handling of exposure of IMS User Registration Related Monitoring Capabilities using SBA protocols.

Examples of embodiments herein enable SBI interactions to expose IMS User Registration Related Monitoring Events that is detected and reported by IMS nodes such as e.g. a S-CSCF node and/or an HSS-IMS over an SBI interface e.g. a unified NEF API.

The configuration of the IMS monitoring events may follow similar principles as the ones existing in 5GC, e.g. comprising:
- A network node, e.g. an AF node, requests the configuration of the monitoring events via a CN node, e.g. a NEF node.
- In turn, the CN node, e.g., the NEF node, relies on a first IMS node, e.g., an HSS node, by subscribing the Monitoring events via a HSS service API and in some embodiments, configure the monitoring event in a corresponding second IMS node, e.g., an S-CSCF node, where an affected UE is registered at any time. The first IMS node, e.g., the HSS node, is aware of the second IMS node, e.g., an S-CSCF node, serving each UE based on existing second IMS node, e.g., an S-CSCF node registration in HSS using Nhss_UECM service operations as defined in TS 23.228.
- The first IMS node, e.g., the HSS node, manages the events that may be detected and reported locally at the first IMS node, e.g. by using IMS Registration Status, change/reallocation of S-CSCF, without further interaction with the S-CSCF.

SBI services with various service operations specific for configuration and reporting of IMS event exposure capabilities are provided according to example embodiments herein. They may e.g., be supported by the CN node e.g., the NEF node, the first IMS node, e.g., the HSS node and the second IMS node e.g., the S-CSCF node. The second IMS node e.g., the S-CSCF node, may become an NF producer within the SBA architecture and may thus be required to register its services, e.g. a new imsEE service, in a Network Repository Function (NRF). The CN node, e.g. the NEF node, and the first IMS node, e.g. the HSS may also register support for the IMS services, e.g. imsEE services, according to embodiments herein in the CN node, e.g. the NRF node.

E.g., IMS User Registration Related Monitoring Capabilities may be configured and reported using SBI interactions using an architecture similar to the one used in 5GC. In particular, a use of NEF as central point of exposure interactions between the 3GPP defined CNs and the application domain may contribute to foster the support of exposure use cases in IMS domain.

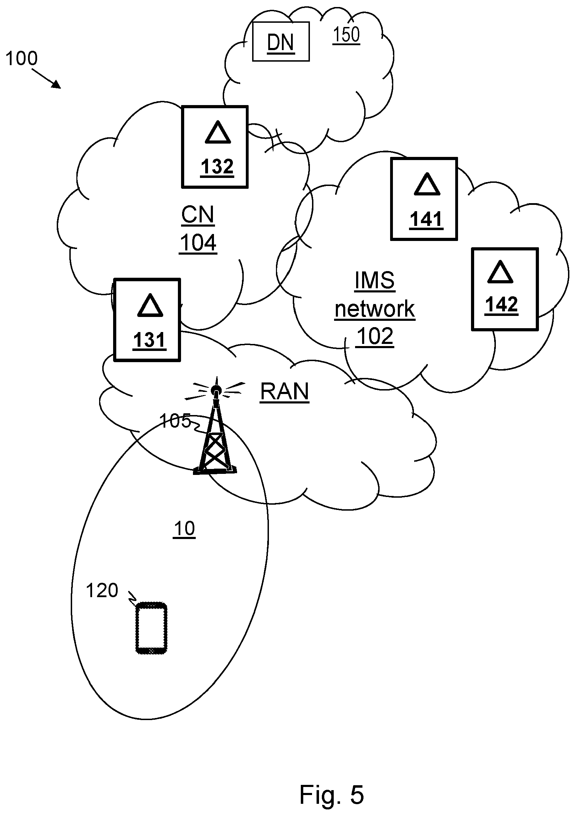

**Figure 5** is a schematic overview depicting **a communications network 100** wherein embodiments herein may be implemented. The communications network 100 comprises one or more **RAN**s, one or more IMS networks, e.g. the **IMS network 102,** and one or more CNs, e.g. the **CN 104.** The communications network 100 may use a number of different technologies, such as Wi-Fi, Long Term Evolution (LTE), LTE-Advanced, 5G, New Radio (NR), 6G, Wideband Code Division Multiple Access (WCDMA), Global System for Mobile communications/enhanced Data rate for GSM Evolution (GSM/EDGE), or Ultra Mobile Broadband (UMB), just to mention a few possible implementations. Embodiments herein relate to recent technology trends that are of particular interest in a 5G context, however, embodiments are also applicable in further development of the existing wireless communication systems such as e.g. WCDMA and LTE.

A number of RAN nodes operate in the communications network 100 such as e.g. a **RAN node 105.** The RAN network node 105 provides radio coverage in a number of cells which may also be referred to as a beam or a beam group of beams, such as a **cell 10** provided by the RAN node 105.

The RAN node 105 may be any of an NG-RAN node, a transmission and reception point e.g. a base station, a radio access network node such as a Wireless Local Area Network (WLAN) access point or an Access Point Station (AP STA), an access controller, a base station, e.g. a radio base station such as a NodeB, an evolved Node B (eNB, eNode B), a gNB, a base transceiver station, a radio remote unit, an Access Point Base Station, a base station router, a transmission arrangement of a radio base station, a stand-alone access point or any other network unit capable of communicating with a UE 120 within the service area served by the network node 105 depending e.g. on the first radio access technology and terminology used. The network node 105 may be referred to as a serving network node and communicates with UEs such as the UE 120, with Downlink (DL) transmissions to the UE 120, and in Uplink (UL) transmissions from the UE 120.

A number of UEs operate in the communication network 100, such as e.g. the **UE 120.** The UE 120 may also be referred to as a UE, an loT device, a mobile station, a non-access point (non-AP), a STA, and/or a wireless terminal. It should be understood by the skilled in the art that "UE" is a non-limiting term which means any terminal, wireless communication terminal, user equipment, Machine Type Communication (MTC) device, Device to Device (D2D) terminal, a radio device in a vehicle, or node e.g. smart phone, laptop, mobile phone, sensor, relay, mobile tablets or even a small base station communicating within a cell.

A **CN node 131** operates in the CN network 104. The CN node 131 may e.g. be an NEF node. The CN node 131 may e.g., be a function node within the CN network 104, e.g. a 5GC, and may be in charge of securely expose NF capabilities and events to AFs external to the 5GC.

A **network node 132** operates in communications network 100. The network node 132 may e.g. be an AF node. The CN node 131 may e.g., operate in the CN 104, or in an external/untrusted network.

A **first IMS node 141** and a **second IMS node 142** operate in the IMS network 102. The IMS network 102 is an architecture for delivering media content over an IP packet switched transport. A first IMS node 141 may e.g., be an HSS node, and the second IMS node 142 may e.g. be a S-CSCF node.

Methods herein may be performed by CN node 131, the first IMS node 141 and the second IMS node 142. As an alternative, a Distributed Node (DN) and functionality, e.g. comprised in a **cloud 150** as shown in Figure 5, may be used for performing or partly performing the methods herein.

Example embodiments herein may provide a framework and/or an architecture, and services to allow the network node 132, e.g. an AF node, to receive notification related to communication services and network exposure capabilities, e.g. IMS-based multimedia telephony, detected by the first IMS node 141, or the second IMS node 142. The first IMS node 141 e.g. the HSS, may act as event distributor since it knows the second IMS node, e.g. the S-CSCF serving node, e.g. the CN node 131, for the UE 120 and the registration status at any given time.

The first IMS node 141, e.g. the HSS, may also, store the events subscribed while the events are active, i.e. when the events have not expired, so that the network node 132, e.g. the AF, is released from the burden of keeping track of the UE 120 registering/de-registering in the IMS network 102.

A number of embodiments will now be described, some of which may be seen as alternatives, while some may be used in combination.

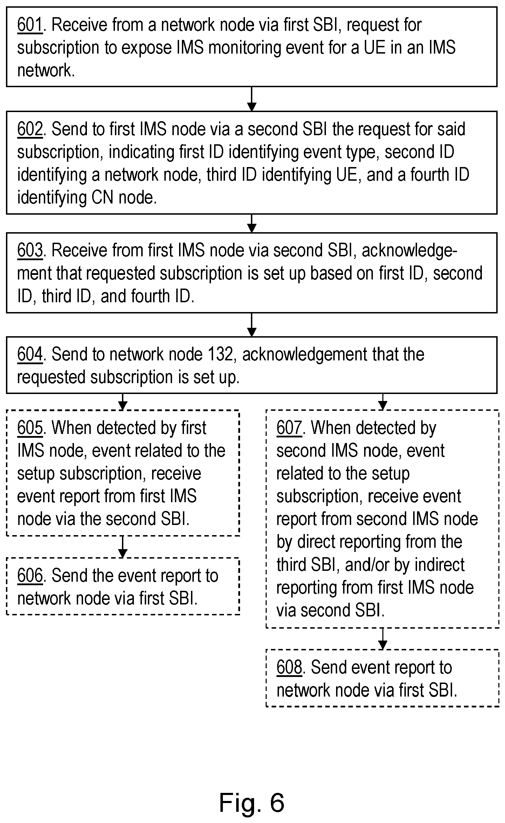

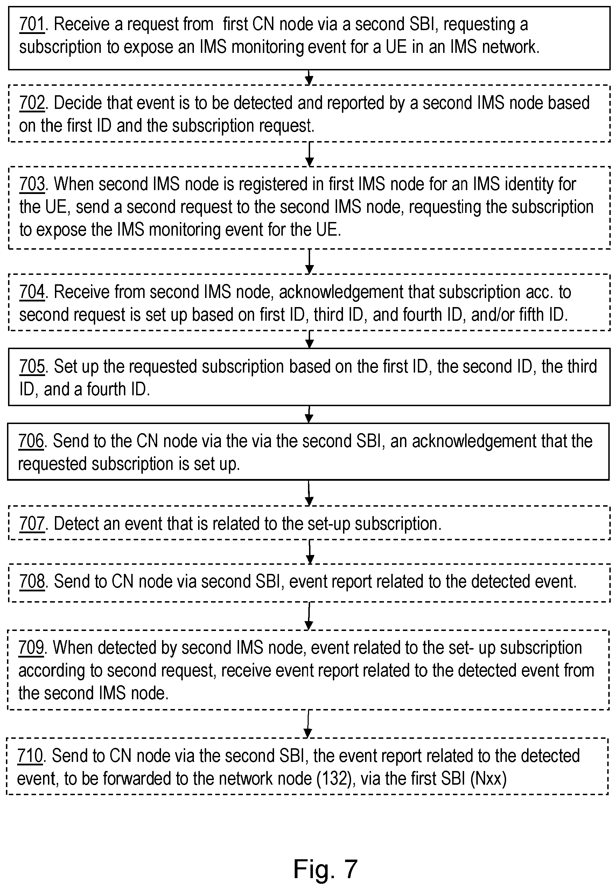

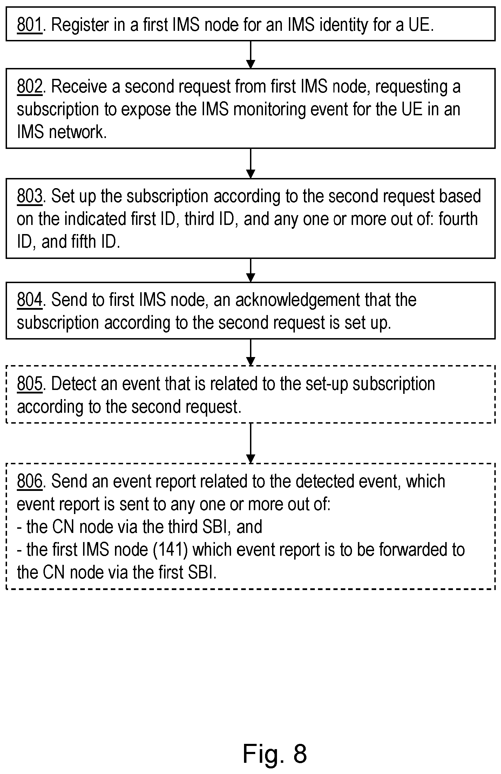

The embodiments of a method will be first be generally described in view of the CN node 131 together with Figure 6, then in view of the first IMS node 141 together with Figure 7, and finally in view of the second IMS node 142 together with Figure 8. This will be followed by a more detailed description.

**Figure 6** shows example embodiments of a method performed by the CN node 131 e.g., a NEF. The method is for handling a subscription of exposure of an IMS monitoring event in a communications network 100.

The method comprises any one or more of the following actions, which actions may be taken in any suitable order. Actions that are optional are presented in dashed boxes in Figure 6.

### Action 601

The CN node 131 receives a request from the network node 132, e.g., the AF, via a first SBI Nxx. The request is requesting a subscription to expose an IMS monitoring event for the UE 120 in the IMS network 102. The request indicates a first ID identifying a type of the monitoring event, a second ID identifying the network node 132, and a third ID identifying the UE 120.

### Action 602

The CN node 131 sends the request for said subscription to the first IMS node 141, e.g. the HSS, via a second SBI Nxy. The request indicates the first ID, the second ID, the third ID, and a fourth ID identifying the CN node 131, e.g., the NEF.

### Action 603

The CN node 131 an acknowledgement that the requested subscription is set up based on the first ID event type, the second ID AF, the third ID UE, and the fourth ID. The acknowledgement may be received from the first IMS node 141 via the second SBI, or the second IMS node 142 via the third SBI. This will be explained below.

### Action 604

The CN node 131 sends the acknowledgement that the requested subscription is set up to the network node 132.

The set up subscription enables the first IMS node 141 to send an event report via the second SBI Nxy, to the CN node 131 e.g., the NEF, based on the fourth ID. This is performed when any event is detected that is related to the set up subscription. The event report is to be forwarded to the network node 132, e.g., the AF, via the first SBI Nxx.

In some embodiments, the event is to be detected and reported by the second IMS node 142, e.g., the S-CSCF.

In these embodiments, the first IMS node 141 has requested the second IMS node 142 in a second request, to set up the subscription. The setup of the requested, i.e. the first requested, subscription of expose of the IMS monitoring event for the UE 120 further comprises the setup subscription according to the second request.

In these embodiments, the setup subscription according to the second request enables the second IMS node 142 to, when any event that is related to the setup subscription according to the second request is detected, send an event report according to any one out of:
- by direct reporting to the CN node 131 NEF, via a third SBI Nxz, based on the fourth ID NEF, and
- by indirect reporting to the CN node 131 NEF, via the second SBI Nxy, and via the first IMS node 141, HSS.

### Action 605

The CN node 131 may when detected by the first IMS node 141 HSS, an event that is related to the set up subscription, receiving 605 an event report from the first IMS node 141 via the second SBI Nxy and

### Action 606

The CN node 131 may sending 606 the event report to the network node 132, e.g., the AF via the first SBI Nxx.

### Action 607

The CN node 131 may when an event is detected by the second IMS node 142 S-CSCF, that is related to the set up subscription, receiving 607 an event report from the second IMS node 142 via any one or more out of: by direct reporting from the third SBI Nxz, and by indirect reporting from the first IMS node 142 S-CSCF via the second SBI Nxy

### Action 608

The CN node 131 may sending 608 the event report to the network node 132 AF via the first SBI Nxx.

**Figure 7** shows example embodiments of a method performed by the first IMS node 141, e.g., a HSS or a HSS. The method is for handling a subscription of exposure of an IMS monitoring event in a communications network.

The method comprises any one or more of the following actions, which actions may be taken in any suitable order. Actions that are optional are presented in dashed boxes in Figure 7.

### Action 701

The first IMS node 141 receives a request from the first CN, node 131, e.g. the NEF, via the second SBI Nxy. The request is requesting a subscription to expose the IMS monitoring event for the UE 120 in the IMS network 102. The request is originating from a network node 132, e.g., the AF. The request indicates a first ID identifying a type of the monitoring event, a second ID identifying the network node 132, a third ID identifying the UE 120, and a fourth ID identifying the CN node 131.

### Action 702

In some embodiments, the first IMS node 141 decides that the event is to be detected and reported by the second IMS node 142, e.g. the S-CSCF, based on the first ID identifying the event type, and the subscription request.

### Action 703

The first IMS node 141 may in these embodiments, when the second IMS node 142 is registered in the first IMS node 141, e.g. the HSS, for an IMS identity for the UE 120, send a second request to the second IMS node 142. The second request is requesting the subscription to expose the IMS monitoring event for the UE 120. The second request indicates the first ID event type, the third ID UE, and any one or more out of: the fourth ID NEF, and a fifth ID identifying the first IMS node 141, e.g., HSS.

### Action 704

The first IMS node 141 may in these embodiments receive from the second IMS node 142, an acknowledgement that the subscription according to the second request is set up. The set up is based on the indicated first ID, third ID, and any one or more out of: fourth ID, and fifth ID.

### Action 705

The first IMS node 141 sets up the requested subscription based on the first ID identifying the event type, the second ID identifying the network node, e.g. the AF, the third ID identifying the UE 120, and a fourth ID identifying the CN node 131, e.g. the NEF.

The setup subscription enables the first IMS node 141, e.g. the HSS, to send an event report via the second SBI Nxy, to the CN node 131 based on the fourth ID, when any event is detected that is related to the setup subscription. The event report is to be forwarded to the network node 132, e.g., the AF, via a first SBI, Nxx.

The setting up of the requested subscription of expose of the IMS monitoring event for the UE 120 may further comprise the setup subscription according to the second request.

The setup subscription according to the second request may enable the second IMS node 142, e.g. the S-CSCF to, when any event that is related to the setup subscription according to the second request is detected, send an event report to any one out of:
- By direct reporting to the CN node 131, e.g., the NEF, via a third SBI Nxz, based on the fourth ID, and
- by indirect reporting to the CN node 131 via the first IMS node 141, e.g., the HSS, based on the fifth ID.

### Action 706

The first IMS node 141 sends to the CN node 131 via the via the second SBI Nxy, an acknowledgement that the requested subscription is set up. The acknowledgement is to be forwarded to the network node 132, e.g., the AF.

### Action 707

The first IMS node 141 may now detect an event that is related to the set up subscription.

### Action 708

The first IMS node 141 may then send an event report related to the detected event to the CN node 131 via the second SBI Nxy, to be forwarded to the network node 132 via the first SBI Nxx.

### Action 709

The first IMS node 141 may when an event is detected by the second IMS node 142, e.g. the S-CSCF, that is related to the set up subscription to expose of IMS monitoring event according to the second request, receive an event report related to the detected event from the second IMS node 142.

### Action 710

The first IMS node 141 may sending 710 to the CN node 131, e.g. the NEF, via the second SBI Nxy, the event report related to the detected event, to be forwarded to the network node 132, AF via the first SBI Nxx.

**Figure 8** shows example embodiments of a method performed by the second IMS node 142, e.g., a S-CSCF. The method is for handling a subscription of exposure of an IMS monitoring event in the communications network 100.

The method comprises any one or more of the following actions, which actions may be taken in any suitable order. Actions that are optional are presented in dashed boxes in Figure 8.

### Action 801

The second IMS node 142 registers in the first IMS node 141, e.g. the HSS, for an IMS identity for the UE 120.

### Action 802

The second IMS node 142 receives a second request from the first IMS node 141 requesting a subscription to expose the IMS monitoring event for the UE 120 in the IMS network 102.

The second request indicates a first ID identifying a type of the monitoring event, a third ID identifying the UE 120, and any one or more out of: a fourth ID identifying a CN node 131, e.g. the NEF, and a fifth ID identifying the first IMS node 141, e.g. the HSS.

### Action 803

The second IMS node 142 sets up the subscription according to the second request based on the indicated first ID, third ID, and any one or more out of: fourth ID, and fifth ID.

### Action 804

The second IMS node 142 sends to the first IMS node 141, e.g. the HSS, an acknowledgement that the subscription according to the second request is set up.

The setup subscription according to the second request enables the second IMS node 142 to, when any event that is related to the setup subscription according to the second request is detected, send an event report to any one out of:
- By direct reporting to the CN node 131, e.g. the NEF, via a third Service Based Interface, SBI, Nxz, based on the fourth ID, and
- by indirect reporting to the CN node 131 NEF via the first IMS node 141, e.g. the HSS, based on the fifth ID.

### Action 805

The second IMS node 142 may now detect an event that is related to the set up subscription according to the second request.

### Action 806

The second IMS node 142 may then send an event report related to the detected event. The event report is sent to any one or more out of:
- The CN node 131, via the third SBI Nxz, and
- the first IMS node 141. The event report is to be forwarded to the CN node 131 via the second SBI Nxy.

In some embodiments herein, e.g. related to the description of Figures 6-8, any one out of:
- The CN node 131 may be represented by a NEF node,
- the network node 132 may be represented by an AF node,
- the first IMS node 141 may be represented by a HSS or a HSS IMS node,
- the second IMS node 142 may be represented by a S-CSCF node,
- the UE 120 may comprise one or more UEs or a group of UEs,
- the third ID identifying the first UE (120) is adapted to comprise a list of UEs identifying the respective UE (120) and: the one or more UEs (120, 122) or UEs in the group of UEs, and
- the event may comprise one or more events.

Embodiments herein such as mentioned above will now be further described and exemplified. The text below is applicable to and may be combined with any suitable embodiment described above.

### Architecture for exposure of IMS User Registration Related Monitoring Capabilities using SBA.

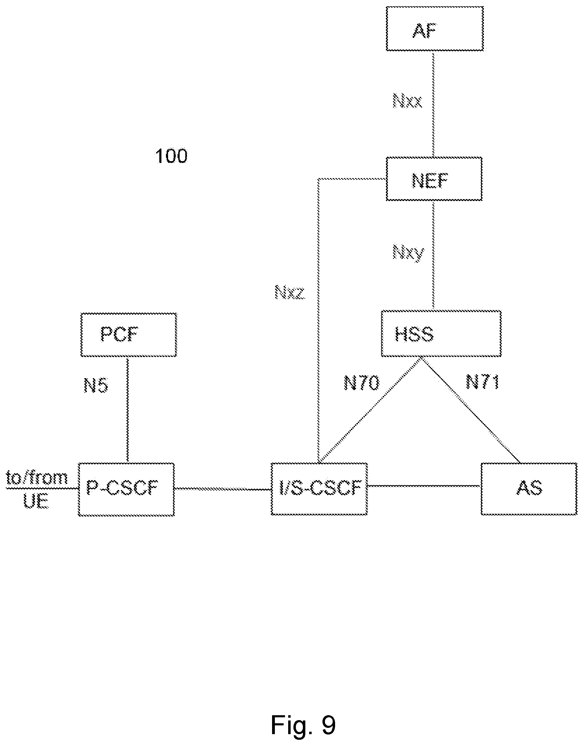

An example of an architecture to support exposure of IMS user registration related monitoring capabilities using SBA according to embodiments herein is depicted in **Figure 9****.** The architecture is comprised in the communications network 100. In Figure 9, the CN node 131 is referred to as NEF, the network node 132 is referred to as AF, the first IMS node 141 is referred to as HSS, and the second IMS node 142 is referred to as I/S-CSCF.

The following SBIs depicted in Figure 9, also referred to as reference points may be provided by embodiments herein:
The first **SBI Nxx** is the reference point between the CN node 131,e.g. the NEF, and the network node 132 e.g. the AF.

The second **SBI Nxy** is the reference point between the first IMS node 141, e.g. the HSS and the CN node 131, e.g., the NEF.

The third **SBI Nxz** is the reference point between an SBI capable I/S-CSCF, such as the second IMS node 142, and a NEF such as the CN node 131.

An SBI service offered by the second IMS node 142, e.g. the S-CSCF is also provided according to some embodiments herein:
**Nscscf_imsEE:** is a service-based interface exhibited by S-CSCF, such as the second IMS node 142, for IMS event exposure.

The existing SBI, reference point **N70** is according to some embodiments herein, extended to include interactions between HSS, such as the first IMS node 131, and S-CSCF, such as the second IMS node 142, to configure an IMS user, e.g. UE 120, registration related monitoring events in the S-CSCF, such as the second IMS node 142, using the Nscscf services according to embodiments herein.

In some embodiments, the following SBI services are extended to support exposure of IMS user registration related monitoring capabilities:
**Nnef_imsEE** which is a Service-based interface exhibited by the NEF such as the CN node 131.

**Nhss_imsEE** which is a Service-based interface exhibited by an SBI capable HSS, such as the first IMS node 131, for IMS event exposure.

### Procedures for exposure of IMS User Registration Related Monitoring Capabilities using SBA

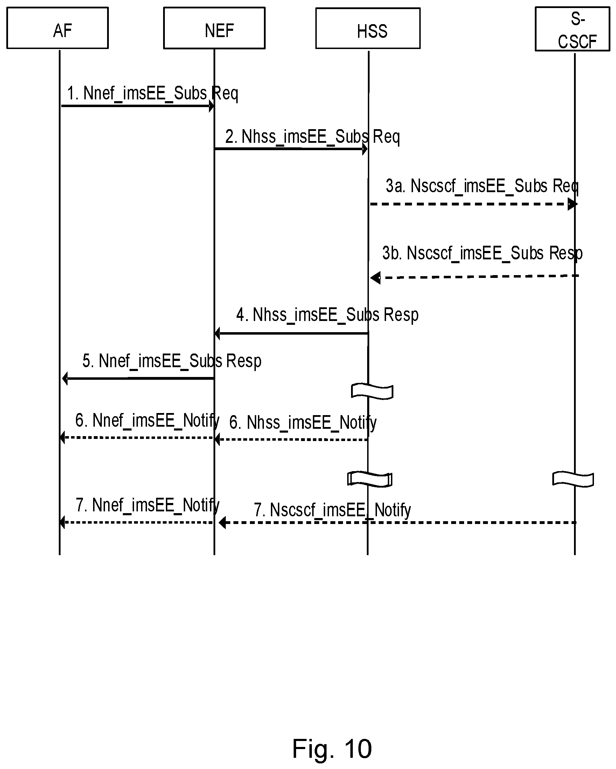

An example of procedures to support exposure of IMS user registration related monitoring capabilities using SBA provided by some embodiments herein are shown in **Figure 10****.**

In Figure 10, the CN node 131 is referred to as NEF, the network node 132 is referred to as AF, the first IMS node 141 is referred to as HSS, and the second IMS node 142 is referred to as S-CSCF.

**Steps 1-2:** The AF such as the network node 132 subscribes to one or several Event(s) (identified by Event Type) for the target UE 120, or a group of UEs or any UE, and provides the associated notification endpoint of the AF, referred to as the second ID identifying the network node 132. This is performed by sending a **Nnef_ImsEventExposure_Subscribe request.** If the event is related to an IMS identity and requires HSS, such as the first IMS node 131, assistance, the NEF such as the CN node 131 subscribes to received Event(s) and provides an associated notification endpoint of the NEF such as the CN node 131, referred to as the **fourth ID** identifying a CN node 131, to the HSS, such as the first IMS node 131. This is performed by sending an **Nhss_imsEventExposure_Subscribe** request. If the reporting event subscription is authorized by the HSS, such as the first IMS node 131, the HSS stores the association of the event and the requester identity. The HSS, such as the first IMS node 131, examines the event type, the request indicates the **first ID** identifying a type of the monitoring event. The HSS, further examines subscription details to determine whether one or more events are to be detected by the S-CSCF, such as the second IMS node 142. In this case, for those applicable events that are detected by the S-CSCF, HSS is responsible for creating event exposure subscriptions whenever a S-CSCF is registered in HSS for the IMS identity, such that the HSS, such as the first IMS node 131, monitors the related event(s). Step 1 is related to and may be combined with Action 601, and Step 2 is related to and may be combined with Actions 602 and 701.

**Step 3:**If there is an S-CSCF, such as the second IMS node 142, already registered, the HSS, such as the first IMS node 131, creates an **Nscscf_EventExposure Subscribe/Unsubscribe** request and sends it to the registered S-CSCF.

The request, including the subscription details including the **first ID** and the as the **fourth ID** identifying the associated notification endpoint of the NEF such as the CN node 131. This is referred to as direct reporting.

Or the HSS, such as the first IMS node 131, indirect reports via the HSS, such as the first IMS node 131. The S-CSCF answers with an **Nscscf_EventExposure Subscribe/Unsubscribe** response with the current event status if available. Step 3a, b is related to and may be combined with Actions 702-704 and 802-804.

Steps 4-5: The HSS, such as the first IMS node 131, acknowledges the execution of **Nhss_imsEventExposure_Subscribe** with the current event status if available. The NEF such as the CN node 131 acknowledges the execution of **Nnef_EventExposure_Subscribe** to the requester that initiated the request. If the NEF has received the first event report already in step 4, the NEF includes the event report in the acknowledgement.

Step 4 is related to and may be combined with Action 603 and 706, and Step 5 is related to and may be combined with Action 604.

Steps 6-7: If the HSS, such as the first IMS node 131, depending on the Event, detects that an event occurs it sends the event report, by means of **Nhss_imsEventExposure_Notify** message to the associated notification endpoint of the NEF such as the CN node 131, identified by the **fourth ID.**
- If the S-CSCF, such as the second IMS node 142 detects that the event occurs it sends the event report, e.g. by means of **Nscscf_EventExposure_Notify** message to associated notification endpoint of the NEF, i.e. direct reporting, identified by the **fourth ID.** Alternative, if the HSS, such as the first IMS node 131, provided its own endpoint for receiving notifications identified by the **fifth ID** from the S-CSCF, i.e. indirect reporting, the S-CSCF sends the event report to the HSS and the HSS forwards the notification to NEF, not shown explicitly in the flow.
- The NEF such as the CN node 131 then forwards to the AF such as the network node 132 the reporting event received by either **Nhss_imsEventExposure_Notify** and/or **Nscscf_EventExposure_Notify.**

Step 6 is related to and may be combined with Action 604 and 706, and Step 5 is related to and may be combined with Action 604

### Services for exposure of IMS User Registration Related Monitoring Capabilities using SBA

NEF such as the CN node 131, service and service operations for exposure of IMS User Registration Related Monitoring Capabilities. The following 3GPP Table 5.3.2-1: IMS Event Exposure, shows the services exposed by NEF for exposure of IMS User Registration Related Monitoring Capabilities:

**3GPP Table 5.3.2-1: IMS Event Exposure**

| **Service** | **Service Operations** | **Operation Semantics** | **Example Consumer(s)** |
|---|---|---|---|
| imsEventExposure (_ImsEE) | Subscribe | Subscribe/Notify | AF |
| | Unsubscribe | Subscribe/Notify | AF |
| | Notification | Subscribe/Notify | AF |
| | ModifySubscription | Subscribe/Notify | AF |

HSS, such as the first IMS node 131, service and service operations for IMS User Registration Related Monitoring Capabilities. The following 3GPP Table 5.3.2-1: IMS Event Exposure Services provided by an SBI capable HSS, shows the services exposed by an SBI capable HSS for IMS Event Exposure:

**3GPP Table 5.3.2-1: IMS Event Exposure Services provided by an SBI capable HSS.**

| **Service** | **Service Operations** | **Operation Semantics** | **Example Consumer(s)** |
|---|---|---|---|
| imsEventExposure (_ImsEE) | Subscribe | Subscribe/Notify | NEF |
| | Unsubscribe | Subscribe/Notify | NEF |
| | Notification | Subscribe/Notify | NEF |
| | ModifySubscription | Subscribe/Notify | NEF |

S-CSCF, such as the second IMS node 142, service and service operations for exposure of IMS User Registration Related Monitoring Capabilities. The following 3GPP Table 5.3.2-1: IMS Event Exposure Services provided by an SBI capable S-CSCF, shows the services exposed by an SBI capable S-CSCF for exposure of IMS User Registration Related Monitoring Capabilities:

**3GPP Table 5.3.2-1: IMS Event Exposure Services provided by an SBI capable S-CSCF**

| **Service** | **Service Operations** | **Operation Semantics** | **Example Consumer(s)** |
|---|---|---|---|
| imsEventExposure (_ImsEE) | Subscribe | Subscribe/Notify | HSS |
| | Unsubscribe | Subscribe/Notify | HSS |
| | Notification | Subscribe/Notify | HSS, NEF |
| | ModifySubscription | Subscribe/Notify | HSS |

Discovery and Selection of NEF, HSS and S-CSCF for exposure of IMS User Registration Related Monitoring Capabilities using SBA.

NEF such as the CN node 131, and HSS, such as the first IMS node 131, are already defined as NF service producers within the SBA framework in 3GPP TS 23.501 and TS 23.228 respectively. In the context of embodiments herein, the NEF and HSS may register in NRF, their support for the Nnef/hss_imsEE service of some embodiments herein, using the existing Nnrf_NFManagement service. Accordingly, NEF and HSS consumers may use the Nnrf_NFDiscovery service to discover NEF and HSS entities supporting the new Nnef/hss_imsEE service.

NOTE: It is worth noting that discovery and selection of NEF by an external AF do not normally use the NRF, since the AF will be typically deployed outside the boundaries of the SBA deployment.

Regarding S-CSCF, such as the second IMS node 142, 3GPP TS 23.228 defines S-CSCF as an SBI capable entity but currently it only consumes services from HSS. Therefore S-CSCF may use the Nnrf_NFDiscovery service to discover HSS but it is not required to use the Nnrf_NFManagement service to register itself as producer of any service. According to embodiments herein, the S-CSCF may be able to use a Nnrf_NFManagement service to register its support for the new Nscscf_imsEE service. This means, NRF may need to support registration requests from S-CSCF as new NF type. Accordingly, other NFs, e.g. HSS, may use the Nnrf_NFDiscovery service to discover S_CSCF entities supporting the new Nscscf_imsEE service.

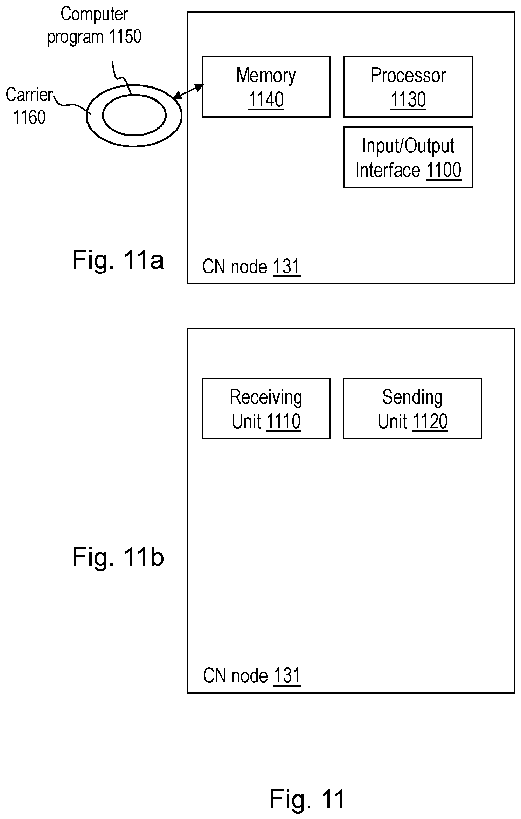

To perform the method actions above, the CN node 131 may comprise an arrangement depicted in **Figures 11a** **and b.** The CN node 131 is configured to handle a subscription of exposure of an IMS monitoring event in the communications network 100.

The CN node 131 may comprise an **input and output interface 1100** configured to communicate with nodes such as the network node 132, the first IMS node 141 and the second IMS node 142. The input and output interface may e.g. comprise a wireless receiver (not shown) and a wireless transmitter (not shown).

The CN node 131 is further configured to, e.g. by means of a **receiving unit 1110** in the CN node 131, receive from the network node 132 via a first SBI Nxx, a request for a subscription to expose an IMS monitoring event for the UE 120 in the IMS network 102. The request is adapted to indicate a first ID identifying a type of the monitoring event, a second ID identifying the network node 132, and a third ID identifying the UE 120.

The CN node 131 is further configured to, e.g. by means of a **sending unit 1120** in the CN node 131, send to the first IMS node 141 via a second SBI Nxy, the request for said subscription. The request is adapted to indicate the first ID, the second ID, the third ID and a fourth ID identifying the CN node 131.

The CN node 131 is further configured to, e.g. by means of the **receiving unit 1110** in the CN node 131, receive an acknowledgement that the requested subscription is set up based on the first ID, the second ID, the third ID, and the fourth ID,

The CN node 131 is further configured to, e.g. by means of the **sending unit 1120** in the CN node 131, send to the network node 132, the acknowledgement that the requested subscription is set up. The set up subscription is adapted to enable the first IMS node 141 to send an event report via the second SBI Nxy to the CN node 131 based on the fourth ID, when any event is detected that is related to the set up subscription, which event report is to be forwarded to the network node 132 via the first SBI Nxx.

The CN node 131 may further be configured to, e.g. by means of the **receiving unit 1110** in the CN node 131, when detected by the first IMS node 141, an event that is related to the set-up subscription, receive an event report from the first IMS node 141 via the second SBI Nxy.

The CN node 131 may further be configured to, e.g. by means of the **sending unit 1120** in the CN node 131, send the event report to the network node 132 via the first SBI Nxx.

In some embodiments, the event is adapted to be detected and reported by the second IMS node 142, the first IMS node 141 is adapted to have requested the second IMS node 142 in a second request to set up the subscription. In these embodiments:
the setup of the requested subscription of expose of the IMS monitoring event for the UE 120 is adapted to further comprise the setup subscription according to the second request, and
the setup subscription according to the second request is adapted to enable the second IMS node 142 to, when any event that is related to the setup subscription according to the second request is detected, send an event report according to any one out of:
   - by direct reporting to the CN node 131 via a third SBI Nxz, based on the fourth ID, and
   - by indirect reporting to the CN node 131 via the second SBI Nxy, and via the first IMS node 141.

In some embodiments, the CN node 131 may further be configured to, e.g. by means of the **receiving unit 1110** in the CN node 131, when an event is detected by the second IMS node 142, that is related to the set up subscription, receive an event report from the second IMS node 142 via any one or more out of: by direct reporting from the third SBI Nxz, and by indirect reporting from the first IMS node 142 via the second SBI Nxy.

In these embodiments, the CN node 131 may further be configured to, e.g. by means of the **sending unit 1120** in the CN node 131, send the event report to the network node 132 via the first SBI Nxx.

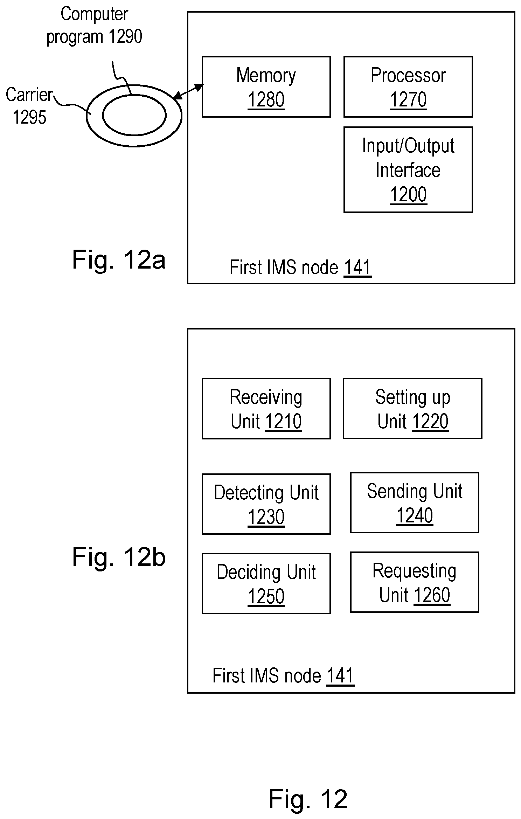

To perform the method actions above, the first IMS node 141 may comprise an arrangement depicted in **Figures 12a** **and b.** The first IMS node 141 is configured to handle a subscription of exposure of an IMS monitoring event in a communications network 100.

The first IMS node 141 may comprise an **input and output interface 1200** configured to communicate with CN nodes such as the CN node 131, and the the second IMS node 142. The input and output interface 1200 may comprise a wireless receiver (not shown) and a wireless transmitter (not shown).

The first IMS node 141 is further configured to, e.g. by means of an **receiving unit 1210** in the first IMS node 141, receive a request from the CN node 131 via a second SBI Nxy, requesting a subscription to expose the IMS monitoring event for the UE 120 in the IMS network 102. The request is adapted to be originating from a network node 132, which request is adapted to indicate a first ID identifying a type of the monitoring event, a second ID identifying the network node 132, a third ID identifying the UE 120, and a fourth ID identifying the CN node 131.

The first IMS node 141 is further configured to, e.g. by means of a **setting up unit 1220** in the first IMS node 141, set up the requested subscription based on the first ID, the second ID, the third ID, and a fourth ID.

The first IMS node 141 is further configured to, e.g. by means of a **receiving unit 1210** in the first IMS node 141, send to the CN node 131 via the via the second SBI Nxy, an acknowledgement that the requested subscription is set up. The acknowledgement is to be forwarded to the network node 132. The setup subscription is adapted to enable the first IMS node 141 to send an event report via the second SBI Nxy, to the CN node 131, based on the fourth ID, when an event is detected that is related to the setup subscription, which event report is to be forwarded to the network node 132 via a first SBI, Nxx.

In some embodiments, the first IMS node 141 is further configured to, e.g. by means of a **detecting unit 1230** in the first IMS node 141, detect an event that is related to the set up subscription.

In these embodiments, the first IMS node 141 may further be configured to, e.g. by means of a **sending unit 1240** in the first IMS node 141, send to the CN node 131 via the second SBI Nxy, an event report related to the detected event, to be forwarded to the network node 132, via the first SBI Nxx.

The first IMS node 141 may further be configured to, e.g. by means of a **deciding unit 1250** in the first IMS node 141, decide that the event is to be detected and reported by a second IMS node 142, based on the first ID and the subscription request.

The first IMS node 141 may further be configured to, e.g. by means of a **requesting unit 1260** in the first IMS node 141, when the second IMS node 142 is registered in the first IMS node 141 for an IMS identity for the UE 120, send a second request to the second IMS node 142, requesting the subscription to expose the IMS monitoring event for the UE 120. The second request is adapted to indicate the first ID, the third ID, and any one or more out of: the fourth ID, and a fifth ID identifying the first IMS node 141.

The first IMS node 141 may further be configured to, e.g. by means of the **receiving unit 1210** in the first IMS node 141, receive from the second IMS node 142, an acknowledgement that the subscription according to the second request is set up based on the indicated first ID, third ID, and any one or more out of: fourth ID, and fifth ID.

The setup of the requested subscription of expose of the IMS monitoring event for the UE 120 may further be adapted to comprises the setup subscription according to the second request.

The setup subscription according to the second request may be adapted to enable the second IMS node 142 to, when any event that is related to the setup subscription according to the second request is detected, send an event report to any one out of:
By a direct report to the CN node 131 via a third SBI Nxz, based on the fourth ID, and by an indirect report to the CN node 131 via the first IMS node 141, based on the fifth ID.

The first IMS node 141 may further be configured to, e.g. by means of the **receiving unit 1210** in the first IMS node 141, when an event is detected by the second IMS node 142 that is related to the set up subscription to expose of IMS monitoring event according to the second request, receive an event report related to the detected event from the second IMS node 142.

The first IMS node 141 may further be configured to, e.g. by means of a **sending unit 1240** in the first IMS node 141, send to the CN node 131 via the second SBI Nxy, the event report related to the detected event, to be forwarded to the network node 132, via the first SBI Nxx.

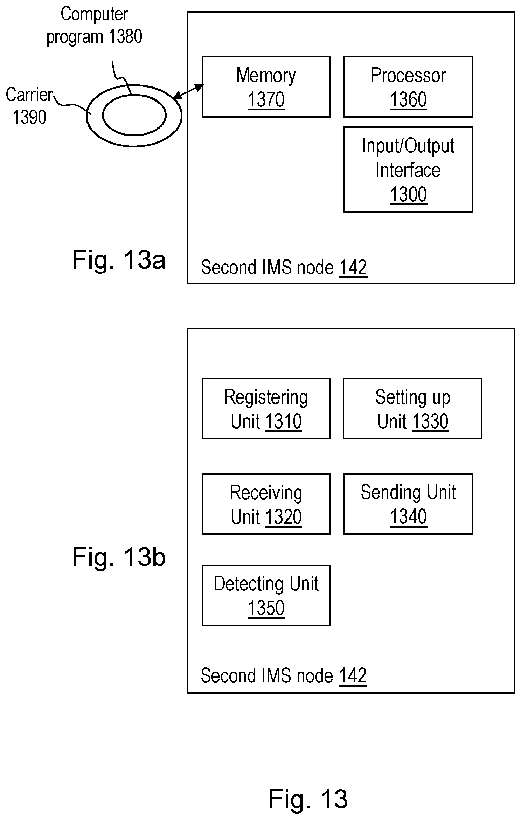

To perform the method actions above, the second IMS node 142 may comprise an arrangement depicted in **Figures 13a** **and b.** The second IMS node 142 is configured to handling a subscription of exposure of an IMS monitoring event in a communications network 100.

The second IMS node 142 may comprise an **input and output interface 1300** configured to communicate with network nodes such as the CN node 131, and the first IMS node 141. The input and output interface may comprise a wireless receiver (not shown) and a wireless transmitter (not shown).

The second IMS node 142 is further configured to, e.g. by means of a **registering unit 1310** in the IMS node 130, register in a first IMS node 141 for an IMS identity for the UE 120.

The second IMS node 142 is further configured to, e.g. by means of a **receiving unit 1320** in the IMS node 130, receive a second request from the first IMS node 141 requesting a subscription to expose the IMS monitoring event for the UE 120 in an IMS network 102. The second request is adapted to indicate a first ID identifying a type of the monitoring event, a third ID identifying the UE 120, and any one or more out of: a fourth ID identifying a CN node 131, and a fifth ID identifying the first IMS node 141.

The second IMS node 142 is further configured to, e.g. by means of a **setting up unit 1330** in the IMS node 130, set up the subscription according to the second request based on the indicated first ID, third ID, and any one or more out of: the fourth ID, and a fifth ID.

The second IMS node 142 is further configured to, e.g. by means of a **sending unit 1340** in the IMS node 130, send to the first IMS node 141, an acknowledgement that the subscription according to the second request is set up. The setup subscription according to the second request is adapted to enable the second IMS node 142 to, when any event that is related to the setup subscription according to the second request is detected, send an event report to any one out of:
- By direct reporting to the CN node 131 via a third Service Based Interface, SBI, Nxz based on the fourth ID, and
- by indirect reporting to the CN node 131 via the first IMS node 141 based on the fifth ID.

The second IMS node 142 may further configured to, e.g. by means of a **detecting unit 1350** in the IMS node 130, detect an event that is related to the setup subscription according to the second request.

The second IMS node 142 may further be configured to, e.g. by means of the **sending unit 1340** in the IMS node 130, send an event report related to the detected event from the second IMS node 142. The event report is adapted to be sent to any one or more out of:
- The CN node 131 via the third SBI Nxz, and
- the first IMS node 141, which event report is to be forwarded to the CN node 131 via the second SBI Nxy.

In some embodiments herein, e.g., related to the description of Figures 11a, b-13a, b, any one out of:
In some of the above embodiments herein, any one out of:
- The CN node 131 may be adapted to be represented by a Network Exposure Function, NEF, node,
- the network node 132 may be adapted to be represented by an Application Function, AF, node,
- the first IMS node 141 may be adapted to be represented by a Home Subscriber Server, HSS, IMS node,
- the second IMS node 142 may be adapted to be represented by a Serving - Call Session Control Function, S-CSCF,
- the UE may be adapted to comprise one or more UEs or a group of UEs,
- the third ID identifying the first UE (120) is adapted to comprise a list of UEs identifying the respective UE (120) and: the one or more UEs (120, 122) or UEs in the group of UEs, and
- the event may be adapted to comprise one or more events.

The embodiments herein may be implemented through a respective processor or one or more processors, such as a **processor 1130** of a processing circuitry in the CN node 131 depicted in Figure 11a, a **processor 1270** of a processing circuitry in the first IMS node 141 depicted in Figure 12a, and a **processor 1360** of a processing circuitry in the second IMS node 142 depicted in Figure 13a together with respective computer program code for performing the functions and actions of the embodiments herein. The program code mentioned above may also be provided as a computer program product, for instance in the form of a data carrier carrying computer program code for performing the embodiments herein when being loaded into the respective UE 120 and RAN node 110. One such carrier may be in the form of a CD ROM disc. It is however feasible with other data carriers such as a memory stick. The computer program code may furthermore be provided as pure program code on a server and downloaded to the respective CN node 131, the first IMS node 141, and the second IMS node 142.

The CN node 131, the first IMS node 141 and the second IMS node 142 may further comprise respective **memories 1140, 1280, 1370,** comprising one or more memory units. The respective memories 1140, 1280, 1370 comprise instructions executable by the processor in the respective CN node 131, first IMS node 141 and second IMS node 142. The respective memories 1140, 1280, 1370 are arranged to be used to store e.g. information, indications, data, configurations, communication data, and applications to perform the methods herein when being executed in the respective CN node 131, the first IMS node 141, and the second IMS node 142.

In some embodiments, respective **computer programs 1150, 1290, 1380** comprise instructions, which when executed by the respective at least one processor 1130, 1270, cause the at least one processor of the respective CN node 131, the first IMS node 141 UE 120 and RAN node 110 to perform the actions above.

In some embodiments, respective **carriers 1160, 1295, 1390** comprise the respective computer program 1150, 1290, 1380 wherein the respective carrier 1160, 1295, 1390 is one of an electronic signal, an optical signal, an electromagnetic signal, a magnetic signal, an electric signal, a radio signal, a microwave signal, or a computer-readable storage medium.

Those skilled in the art will appreciate that the units in the respective CN node 131, the first IMS node 141 and the second IMS node 142 described above may refer to a combination of analog and digital circuits, and/or one or more processors configured with software and/or firmware, e.g. stored in the respective CN node 131, the first IMS node 141 and the second IMS node 142, that when executed by the respective one or more processors such as the processors described above. One or more of these processors, as well as the other digital hardware, may be included in a single Application-Specific Integrated Circuitry ASIC, or several processors and various digital hardware may be distributed among several separate components, whether individually packaged or assembled into a system-on-a-chip SoC.

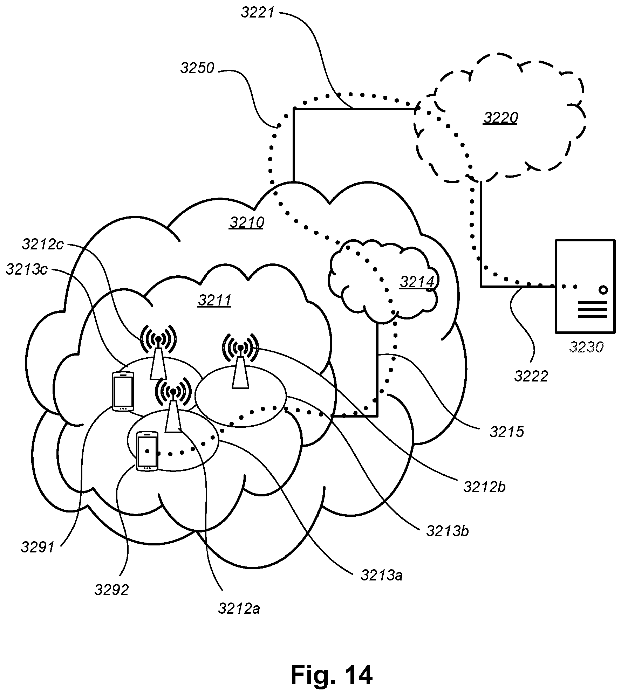

With reference to **Figure 14****,** in accordance with an embodiment, a communication system includes a telecommunication network 3210, such as a 3GPP-type cellular network, which comprises an access network 3211, such as a radio access network, and a core network 3214. The access network 3211 comprises a plurality of base stations 3212a, 3212b, 3212c, such as the RAN node 105, AP STAs NBs, eNBs, gNBs or other types of wireless access points, each defining a corresponding coverage area 3213a, 3213b, 3213c. Each base station 3212a, 3212b, 3212c is connectable to the core network 3214 over a wired or wireless connection 3215. A first user equipment (UE) such as the UE 120 and/or a Non-AP STA 3291 located in coverage area 3213c is configured to wirelessly connect to, or be paged by, the corresponding base station 3212c. A second UE 3292 such as the second UE 122 and/or a Non-AP STA in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Figure 14 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

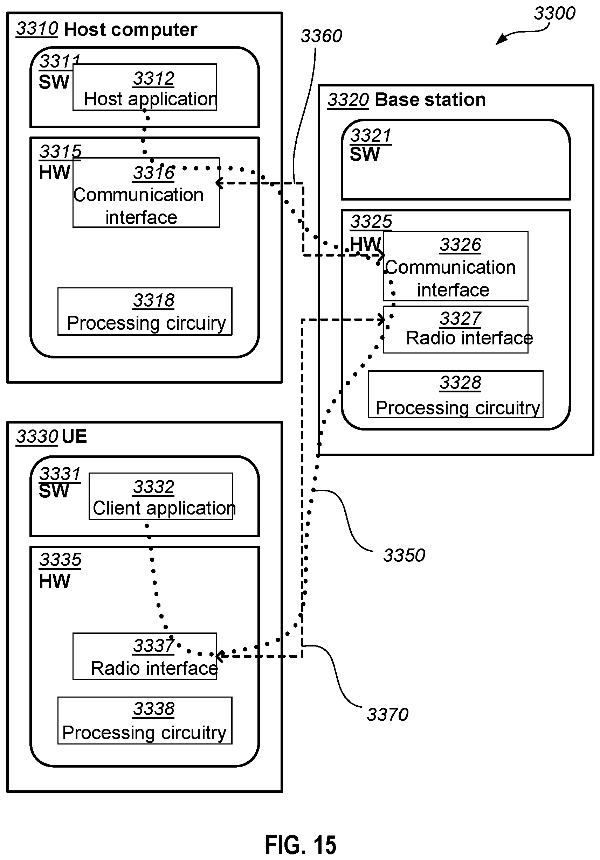

Example implementations, in accordance with an embodiment, of the UE, base station and host computer discussed in the preceding paragraphs will now be described with reference to **Figure 15****.** In a communication system 3300, a host computer 3310 comprises hardware 3315 including a communication interface 3316 configured to setup and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Figure 15) served by the base station 3320. The communication interface 3326 may be configured to facilitate a connection 3360 to the host computer 3310. The connection 3360 may be direct or it may pass through a core network (not shown in Figure 15) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to setup and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides. It is noted that the host computer 3310, base station 3320 and UE 3330 illustrated in Figure 15 may be identical to the host computer 3230, one of the base stations 3212a, 3212b, 3212c and one of the UEs 3291, 3292 of Figure 14, respectively. This is to say, the inner workings of these entities may be as shown in Figure 15 and independently, the surrounding network topology may be that of Figure 14.

In Figure 15, the OTT connection 3350 has been drawn abstractly to illustrate the communication between the host computer 3310 and the use equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the [select the applicable **RAN** effect: data rate, latency, power consumption] and thereby provide benefits such as [select the applicable corresponding effect on the **OTT service:** reduced user waiting time, relaxed restriction on file size, better responsiveness, extended battery lifetime].

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

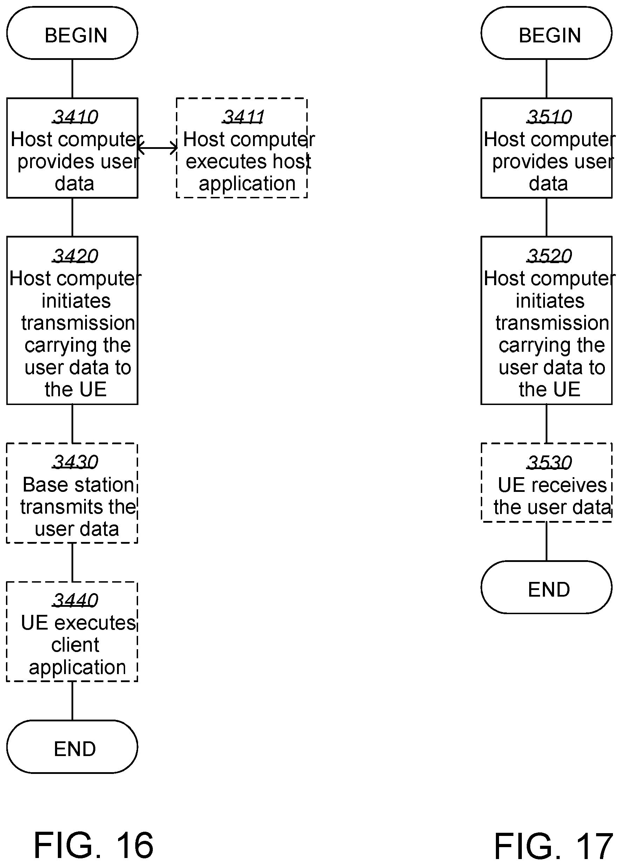

**Figure 16** is a flowchart illustrating a method implemented in a communication system, in accordance with one embodiment. The communication system includes a host computer, a base station such as a AP STA, and a UE such as a Non-AP STA which may be those described with reference to Figure 14 and Figure 15. For simplicity of the present disclosure, only drawing references to Figure 16 will be included in this section. In a first step 3410 of the method, the host computer provides user data. In an optional substep 3411 of the first step 3410, the host computer provides the user data by executing a host application. In a second step 3420, the host computer initiates a transmission carrying the user data to the UE. In an optional third step 3430, the base station transmits to the UE the user data which was carried in the transmission that the host computer initiated, in accordance with the teachings of the embodiments described throughout this disclosure. In an optional fourth step 3440, the UE executes a client application associated with the host application executed by the host computer.

**Figure 17** is a flowchart illustrating a method implemented in a communication system, in accordance with one embodiment. The communication system includes a host computer, a base station such as a AP STA, and a UE such as a Non-AP STA which may be those described with reference to Figure 14 and Figure 15. For simplicity of the present disclosure, only drawing references to Figure 17 will be included in this section. In a first step 3510 of the method, the host computer provides user data. In an optional substep (not shown) the host computer provides the user data by executing a host application. In a second step 3520, the host computer initiates a transmission carrying the user data to the UE. The transmission may pass via the base station, in accordance with the teachings of the embodiments described throughout this disclosure. In an optional third step 3530, the UE receives the user data carried in the transmission.

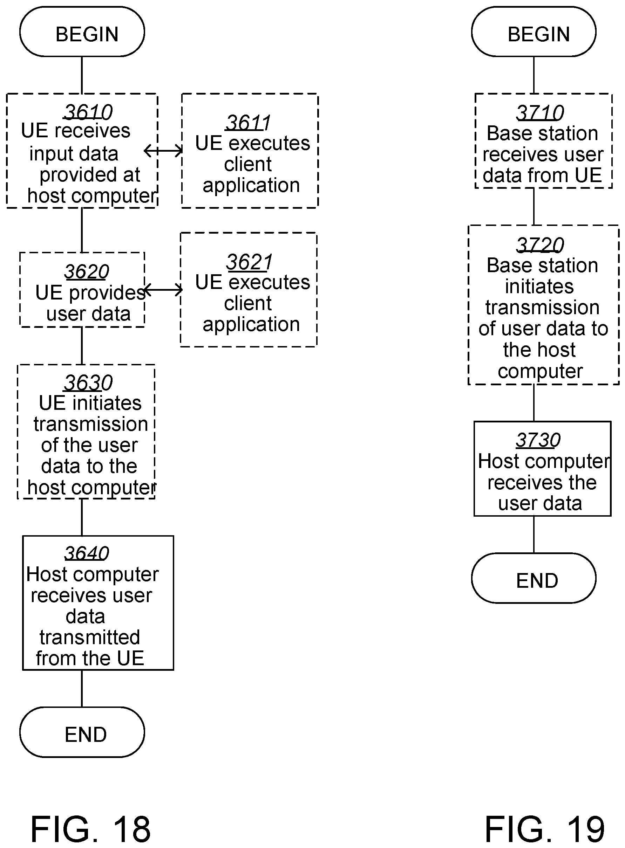

**Figure 18** is a flowchart illustrating a method implemented in a communication system, in accordance with one embodiment. The communication system includes a host computer, a base station such as a AP STA, and a UE such as a Non-AP STA which may be those described with reference to Figure 14 and Figure 15. For simplicity of the present disclosure, only drawing references to Figure 18 will be included in this section. In an optional first step 3610 of the method, the UE receives input data provided by the host computer. Additionally, or alternatively, in an optional second step 3620, the UE provides user data. In an optional substep 3621 of the second step 3620, the UE provides the user data by executing a client application. In a further optional substep 3611 of the first step 3610, the UE executes a client application which provides the user data in reaction to the received input data provided by the host computer. In providing the user data, the executed client application may further consider user input received from the user. Regardless of the specific manner in which the user data was provided, the UE initiates, in an optional third substep 3630, transmission of the user data to the host computer. In a fourth step 3640 of the method, the host computer receives the user data transmitted from the UE, in accordance with the teachings of the embodiments described throughout this disclosure.

**Figure 19** is a flowchart illustrating a method implemented in a communication system, in accordance with one embodiment. The communication system includes a host computer, a base station such as an AP STA, and a UE such as a Non-AP STA which may be those described with reference to Figure 14 and Figure 15. For simplicity of the present disclosure, only drawing references to Figure 19 will be included in this section. In an optional first step 3710 of the method, in accordance with the teachings of the embodiments described throughout this disclosure, the base station receives user data from the UE. In an optional second step 3720, the base station initiates transmission of the received user data to the host computer. In a third step 3730, the host computer receives the user data carried in the transmission initiated by the base station.

When using the word "comprise" or "comprising" it shall be interpreted as non-limiting, i.e. meaning "consist at least of".

## Claims

1. A method performed by a Core Network, CN, node (131) for handling a subscription of exposure of an Internet protocol Multimedia System, IMS, monitoring event in a communications network (100), the method comprising:
*receiving* (601) from a network node (132) via a first Service Based Interface, SBI, (Nxx), a request for a subscription to expose an IMS monitoring event for a User Equipment, UE, (120), in an IMS network (102), which request indicates a first ID identifying a type of the monitoring event, a second ID identifying the network node (132), and a third ID identifying the UE (120),
*sending* (602) to a first IMS node (141) via a second SBI (Nxy), the request for said subscription, which request indicates the first ID, the second ID, the third ID, and a fourth ID identifying the CN node (131),
*receiving* (603) an acknowledgement that the requested subscription is set up based on the first ID, the second ID, the third ID, and the fourth ID,
*sending* (604) to the network node (132), the acknowledgement that the requested subscription is set up,
wherein the set up subscription enables the first IMS node (141) to send an event report via the second SBI (Nxy), to the CN node (131), based on the fourth ID, when any event is detected that is related to the set up subscription, which event report is to be forwarded to the network node (132), via the first SBI (Nxx).

2. The method according to claim 1, the method further comprising:
when detected by the first IMS node (141), an event that is related to the set up subscription, *receiving* (605) an event report from the first IMS node (141) via the second SBI (Nxy) and
*sending* (606) the event report to the network node (132) via the first SBI (Nxx).

3. The method according to any of the claims 1-2, wherein:
the event is to be detected and reported by a second IMS node (142),
the first IMS node (141) has requested the second IMS node (142) in a second request to set up the subscription, and
the setup of the requested subscription of expose of the IMS monitoring event for the UE (120) further comprises the setup subscription according to the second request, and
the setup subscription according to the second request enables the second IMS node (142) to, when any event that is related to the setup subscription according to the second request is detected, send an event report according to any one out of:
- by direct reporting to the CN node (131) via a third SBI (Nxz), based on the fourth ID, and
- by indirect reporting to the CN node (131) via the second SBI (Nxy), and via the first IMS node (141),.

4. The method according to claim 3, the method further comprising:
when an event is detected by the second IMS node (142), that is related to the set up subscription, *receiving* (607) an event report from the second IMS node (142) via any one or more out of: by direct reporting from the third SBI (Nxz), and by indirect reporting from the first IMS node (142) via the second SBI (Nxy), and
*sending* (608) the event report to the network node (132) via the first SBI (Nxx).

5. The method according to any of the claims 1-4, wherein any one out of:
- the CN node (131) is represented by a Network Exposure Function, NEF, node,
- the network node (132) is represented by an Application Function, AF, node,
- the first IMS node (141) is represented by a Home Subscriber Server, HSS, IMS node,
- the second IMS node (142) is represented by a Serving - Call Session Control Function, S-CSCF,
- the UE (120) comprises one or more UEs or a group of UEs,
- the third ID identifying the first UE (120) is adapted to comprise a list of UEs identifying the respective UE (120) and: the one or more UEs (120, 122) or UEs in the group of UEs, and
- the event comprises one or more events.

6. A method performed by a first Internet protocol Multimedia System, IMS, node (141) for handling a subscription of exposure of an IMS monitoring event in a communications network (100), the method comprising:
*receiving* (701) via a second Service Based Interface, SBI, (Nxy) a request from a first Core Network, CN, node (131), requesting a subscription to expose the IMS monitoring event for a User Equipment, UE, (120) in an IMS network (102), which request is originating from a network node (132), which request indicates a first ID identifying a type of the monitoring event, a second ID identifying the network node (132), a third ID identifying the UE (120), and a fourth ID identifying the CN node (131),
*setting* (705) up the requested subscription based on the first ID, the second ID, the third ID, and a fourth ID,
*sending* (706) to the CN node (131) via the via the second SBI (Nxy), an acknowledgement that the requested subscription is set up, which acknowledgement is to be forwarded to the network node (132), and
wherein the setup subscription enables the first IMS node (141), to send an event report via the second SBI (Nxy), to the CN node (131), based on the fourth ID, when any event is detected that is related to the setup subscription, which event report is to be forwarded to the network node (132), via a first SBI, (Nxx).

7. The method according to claim 6, the method further comprising:
*detecting* (707) an event that is related to the set up subscription,
*sending* (708) to the CN node (131) via the second SBI (Nxy), an event report related to the detected event, to be forwarded to the network node (132), via the first SBI (Nxx).

8. The method according to any of the claims 6-7, further comprising:
*deciding* (702) that the event is to be detected and reported by a second IMS node (142) based on the first ID and the subscription request,
when the second IMS node (142) is registered in the first IMS node (141) for an IMS identity for the UE (120), *sending* (703) a second request to the second IMS node (142), requesting the subscription to expose the IMS monitoring event for the UE (120), which second request indicates the first ID, the third ID, and any one or more out of: the fourth ID, and a fifth ID identifying the first IMS node (141), and
*receiving* (704) from the second IMS node (142), an acknowledgement that the subscription according to the second request is set up based on the indicated first ID, third ID, and any one or more out of: fourth ID, and fifth ID,
and wherein the *setting* (705) up of the requested subscription of expose of the IMS monitoring event for the UE (120) further comprises the setup subscription according to the second request.

9. The method according to claim 8, wherein the setup subscription according to the second request enables the second IMS node (142) to, when any event that is related to the setup subscription according to the second request is detected, send an event report to any one out of:
by direct reporting to the CN node (131), via a third SBI (Nxz), based on the fourth ID, and
by indirect reporting to the CN node (131), via the first IMS node (141) based on the fifth ID.

10. The method according to claim 9, the method further comprising:
when an event is detected by the second IMS node (142) that is related to the set up subscription to expose of IMS monitoring event according to the second request, *receiving* (709) an event report related to the detected event from the second IMS node (142), and
*sending* (710) to the CN node (131) via the second SBI (Nxy), the event report related to the detected event, to be forwarded to the network node (132), via the first SBI (Nxx).

11. A method performed by a second Internet protocol Multimedia System, IMS, node (142), for handling a subscription of exposure of an IMS monitoring event in a communications network (100), the method comprising:
*registering* (801) in a first IMS node (141) for an IMS identity for a User Equipment, UE (120),
*receiving* (802) a second request from the first IMS node (141) requesting a subscription to expose the IMS monitoring event for the UE (120) in an IMS network (102),
which second request indicates a first ID identifying a type of the monitoring event, a third ID identifying the UE (120), and any one or more out of: a fourth ID identifying a CN node (131), and a fifth ID identifying the first IMS node (141), and
*setting* (803) up the subscription according to the second request based on the indicated first ID, third ID, and any one or more out of: the fourth ID, and a fifth ID,
*sending* (804) to the first IMS node (141), an acknowledgement that the subscription according to the second request is set up,
wherein the setup subscription according to the second request enables the second IMS node (142) to, when any event that is related to the setup subscription according to the second request is detected, send an event report to any one out of:
- by direct reporting to the CN node (131), via a third Service Based Interface, SBI, (Nxz), based on the fourth ID, and
- by indirect reporting to the CN node (131) via the first IMS node (141), based on the fifth ID.

12. The method according to claim 11, the method further comprising:
*detecting* (805) an event that is related to the set up subscription according to the second request,
*sending* (806) an event report related to the detected event, which event report is sent to any one or more out of:
- the CN node (131) via the third SBI (Nxz), and
- the first IMS node (141) which event report is to be forwarded to the CN node (131) via the second SBI (Nxy).

13. A Core Network, CN, node (131) configured to handle a subscription of exposure of an Internet protocol Multimedia System, IMS, monitoring event in a communications network (100), the CN node (131) further being configured to:
*receive* from a network node (132) via a first Service Based Interface, SBI, (Nxx), a request for a subscription to expose an IMS monitoring event for a User Equipment, UE, (120), in an IMS network (102), which request is adapted to indicate a first ID identifying a type of the monitoring event, a second ID identifying the network node (132), and a third ID identifying the UE (120),
*send* to a first IMS node (141) via a second SBI (Nxy), the request for said subscription, which request is adapted to indicate the first ID, the second ID, the third ID and a fourth ID identifying the CN node (131),
*receive* an acknowledgement that the requested subscription is set up based on the first ID, the second ID, the third ID, and the fourth ID,
*send* to the network node (132), the acknowledgement that the requested subscription is set up, and
wherein the set up subscription is adapted to enable the first IMS node (141) to send an event report via the second SBI (Nxy) to the CN node (131) based on the fourth ID, when any event is detected that is related to the set up subscription, which event report is to be forwarded to the network node (132) via the first SBI (Nxx).

14. A first Internet protocol Multimedia System, IMS, node (141), configured to handle a subscription of exposure of an IMS monitoring event in a communications network (100), the IMS node (141) further being configured to:
*receive* via a second Service Based Interface, SBI, (Nxy) a request from a Core Network, CN, node (131), requesting a subscription to expose the IMS monitoring event for a User Equipment, UE, (120) in an IMS network (102), which request is adapted to be originating from a network node (132), which request is adapted to indicate a first ID identifying a type of the monitoring event, a second ID identifying the network node (132), a third ID identifying the UE (120), and a fourth ID identifying the CN node (131),
*set* up the requested subscription based on the first ID, the second ID, the third ID, and a fourth ID,
*send* to the CN node (131) via the via the second SBI (Nxy), an acknowledgement that the requested subscription is set up, which acknowledgement is to be forwarded to the network node (132), and
wherein the setup subscription is adapted to enable the first IMS node (141) to send an event report via the second SBI (Nxy), to the CN node (131), based on the fourth ID, when an event is detected that is related to the setup subscription, which event report is to be forwarded to the network node (132) via a first SBI, (Nxx).

15. A second Internet protocol Multimedia System, IMS, node (142) configured to handling a subscription of exposure of an IMS monitoring event in a communications network (100), the IMS node (142) further being configured to:
*register in* a first IMS node (141) for an IMS identity for a User Equipment, UE (120),
*receive* a second request from the first IMS node (141) requesting a subscription to expose the IMS monitoring event for the UE (120) in an IMS network (102),
which second request is adapted to indicate a first ID identifying a type of the monitoring event, a third ID identifying the UE (120), and any one or more out of: a fourth ID identifying a CN node (131), and a fifth ID identifying the first IMS node (141) and
*set* up the subscription according to the second request based on the indicated first ID, third ID, and any one or more out of: the fourth ID, and a fifth ID,
*send* to the first IMS node (141), an acknowledgement that the subscription according to the second request is set up,
wherein the setup subscription according to the second request is adapted to enable the second IMS node (142) to, when any event that is related to the setup subscription according to the second request is detected, send an event report to any one out of:
- by direct reporting to the CN node (131) via a third Service Based Interface, SBI, (Nxz) based on the fourth ID, and
- by indirect reporting to the CN node (131) via the first IMS node (141) based on the fifth ID.

## Patentansprüche

1. Verfahren, das von einem Kernnetzwerk-, CN, Knoten (131) zum Bearbeiten eines Offenlegungsabonnements eines Internetprotokoll-Multimediasystem-, IMS, Überwachungsereignisses in einem Kommunikationsnetzwerk (100) durchgeführt wird, wobei das Verfahren Folgendes umfasst:
*Empfangen* (601) von einem Netzwerkknoten (132) über eine erste dienstbasierte Schnittstelle, SBI, (Nxx), einer Anfrage für ein Abonnement, um ein IMS-Überwachungsereignis für eine Benutzerausrüstung, UE, (120) in einem IMS-Netzwerk (102) offenzulegen, wobei die Anfrage eine erste ID, die einen Typ des Überwachungsereignisses identifiziert, eine zweite ID, die den Netzwerkknoten (132) identifiziert, und eine dritte ID, die die UE (120) identifiziert, angibt,
*Senden* (602), über eine zweite SBI (Nxy) an einen ersten IMS-Knoten (141), der Anfrage für das Abonnement, wobei die Anfrage die erste ID, die zweite ID, die dritte ID und eine vierte ID, die den CN-Knoten (131) identifiziert, angibt,
*Empfangen* (603) einer Bestätigung, dass das angeforderte Abonnement basierend auf der ersten ID, der zweiten ID, der dritten ID und der vierten ID eingerichtet wurde,
*Senden* (604), an den Netzwerkknoten (132), der Bestätigung, dass das angeforderte Abonnement eingerichtet wurde,
wobei das eingerichtete Abonnement dem ersten IMS-Knoten (141) ermöglicht, einen Ereignisbericht über die zweite SBI (Nxy) an den CN-Knoten (131) basierend auf der vierten ID zu senden, wenn irgendein Ereignis erfasst wird, das mit dem eingerichteten Abonnement zusammenhängt, wobei dieser Ereignisbericht über die erste SBI (Nxx) an den Netzwerkknoten (132) weitergeleitet werden soll.

2. Verfahren nach Anspruch 1, wobei das Verfahren ferner umfasst:
wenn vom ersten IMS-Knoten (141) ein Ereignis erfasst wird, das mit dem eingerichteten Abonnement zusammenhängt, *Empfangen* (605) eines Ereignisberichts vom ersten IMS-Knoten (141) über die zweite SBI (Nxy) und
*Senden* (606) des Ereignisberichts an den Netzwerkknoten (132) über die erste SBI (Nxx).

3. Verfahren nach einem der Ansprüche 1-2, wobei:
das Ereignis von einem zweiten IMS-Knoten (142) erfasst und gemeldet werden soll,
der erste IMS-Knoten (141) den zweiten IMS-Knoten (142) in einer zweiten Anfrage angefragt hat, das Abonnement einzurichten, und
die Einrichtung des angefragten Abonnements zum Offenlegen eines IMS-Überwachungsereignisses für die UE (120) ferner das Einrichtungsabonnement gemäß der zweiten Anfrage umfasst, und
das eingerichtete Abonnement gemäß der zweiten Anfrage dem zweiten IMS-Knoten (142) ermöglicht, wenn irgendein Ereignis, das mit dem eingerichteten Abonnement gemäß der zweiten Anfrage zusammenhängt, erfasst wird, einen Ereignisbericht gemäß einem des Folgenden zu senden:
- durch direktes Melden an den CN-Knoten (131) über eine dritte SBI (Nxz), basierend auf der vierten ID, und
- durch indirektes Melden an den CN-Knoten (131) über die zweite SBI (Nxy) und über den ersten IMS-Knoten (141).

4. Verfahren nach Anspruch 3, wobei das Verfahren ferner umfasst:
wenn ein Ereignis vom zweiten IMS-Knoten (142) erfasst wird, das mit dem eingerichteten Abonnement zusammenhängt, *Empfangen* (607) eines Ereignisberichts vom zweiten IMS-Knoten (142) über eines oder mehrere des Folgenden: durch direktes Melden von der dritten SBI (Nxz) und durch indirektes Melden vom ersten IMS-Knoten (142) über die zweite SBI (Nxy), und
*Senden* (608) des Ereignisberichts an den Netzwerkknoten (132) über die erste SBI (Nxx).

5. Verfahren nach einem der Ansprüche 1-4, wobei eines des Folgenden zutrifft:
- der CN-Knoten (131) wird durch einen Networkexpositionsfunktion-, NEF, Knoten dargestellt,
- der Netzwerkknoten (132) wird durch einen Anwendungsfunktions-, AF, Knoten dargestellt,
- der erste IMS-Knoten (141) wird durch einen Heim-Teilnehmer-Server-, HSS, IMS-Knoten dargestellt,
- der zweite IMS-Knoten (142) wird durch eine Dienstanrufs-Sitzungs-Kontrollfunktion, S-CSCF, dargestellt,
- die UE (120) umfasst eine oder mehrere UEs oder eine Gruppe von UEs,
- die dritte ID, die die erste UE (120) identifiziert, ist so angepasst, dass sie eine Liste von UEs umfasst, die die jeweilige UE (120) und Folgendes identifiziert: die eine oder mehreren UEs (120, 122) oder UEs in der Gruppe von UEs, und
- das Ereignis umfasst ein oder mehrere Ereignisse.

6. Verfahren, das von einem ersten Internetprotokoll-Multimediasystem-, IMS, Knoten (141) durchgeführt wird, zum Bearbeiten eines Offenlegungsabonnements eines IMS-Überwachungsereignisses in einem Kommunikationsnetz (100), wobei das Verfahren Folgendes umfasst:
*Empfangen*(701), über eine zweite dienstbasierte Schnittstelle, SBI, (Nxy), einer Anfrage von einem ersten Kernnetzwerk-, CN, Knoten (131), die ein Abonnement anfragt, um das IMS-Überwachungsereignis für eine Benutzerausrüstung, UE, (120) in einem IMS-Netzwerk (102) offenzulegen, wobei die Anfrage von einem Netzwerkknoten (132) stammt, wobei die Anfrage eine erste ID, die einen Typ des Überwachungsereignisses identifiziert, eine zweite ID, die den Netzwerkknoten (132) identifiziert, eine dritte ID, die die UE (120) identifiziert, und eine vierte ID, die den CN-Knoten (131) identifiziert, angibt,
*Einrichten* (705) des angefragten Abonnements basierend auf der ersten ID, der zweiten ID, der dritten ID und einer vierten ID,
*Senden* (706), an den CN-Knoten (131) über die zweite SBI (Nxy), einer Bestätigung, dass das angeforderte Abonnement eingerichtet wurde, wobei die Bestätigung an den Netzwerkknoten (132) weitergeleitet werden soll, und
wobei das eingerichtete Abonnement dem ersten IMS-Knoten (141) ermöglicht, einen Ereignisbericht über die zweite SBI (Nxy) an den CN-Knoten (131) basierend auf der vierten ID zu senden, wenn irgendein Ereignis erfasst wird, das mit dem eingerichteten Abonnement zusammenhängt, wobei dieser Ereignisbericht über eine erste SBI (Nxx) an den Netzwerkknoten (132) weitergeleitet werden soll.

7. Verfahren nach Anspruch 6, wobei das Verfahren ferner umfasst:
*Erfassen* (707) eines Ereignisses, das mit dem eingerichteten Abonnement zusammenhängt,
*Senden* (708), an den CN-Knoten (131) über die zweite SBI (Nxy), eines Ereignisberichts, der mit dem erfassten Ereignis zusammenhängt, der über die erste SBI (Nxx) an den Netzwerkknoten (132) weitergeleitet werden soll.

8. Verfahren nach einem der Ansprüche 6-7, wobei das Verfahren ferner umfasst:
*Entscheiden* (702), dass das Ereignis von einem zweiten IMS-Knoten (142) basierend auf der ersten ID und der Abonnementanfrage erfasst und gemeldet werden soll,
wenn der zweite IMS-Knoten (142) beim ersten IMS-Knoten (141) für eine IMS-Kennung für die UE (120) registriert ist, *Senden* (703) einer zweiten Anfrage an den zweiten IMS-Knoten (142), Anfragen des Abonnements, um das IMS-Überwachungsereignis für die UE (120) offenzulegen, wobei die zweite Anfrage die erste ID, die dritte ID und eine oder mehrere der folgenden angibt: die vierte ID und eine fünfte ID, die den ersten IMS-Knoten (141) identifiziert, und
*Empfangen* (704), vom zweiten IMS-Knoten (142), einer Bestätigung, dass das Abonnement gemäß der zweiten Anfrage basierend auf der angegebenen ersten ID, dritten ID und einer oder mehrerer der folgenden eingerichtet wurde: vierten ID und fünften ID,
und wobei das *Einrichten* (705) des angefragten Abonnements zum Offenlegen eines IMS-Überwachungsereignisses für die UE (120) ferner das Einrichtungsabonnement gemäß der zweiten Anfrage umfasst.

9. Verfahren nach Anspruch 8, wobei das Einrichtungsabonnement gemäß der zweiten Anfrage dem zweiten IMS-Knoten (142) ermöglicht, wenn irgendein Ereignis, das mit dem eingerichteten Abonnement gemäß der zweiten Anfrage zusammenhängt, erfasst wird, einen Ereignisbericht durch eines des Folgenden zu senden:
durch direktes Melden an den CN-Knoten (131) über eine dritte SBI (Nxz), basierend auf der vierten ID, und
- durch indirektes Melden an den CN-Knoten (131) über den ersten IMS-Knoten (141), basierend auf der fünften ID.

10. Verfahren nach Anspruch 9, wobei das Verfahren ferner umfasst:
wenn ein Ereignis vom zweiten IMS-Knoten (142) erfasst wird, das mit dem eingerichteten Abonnement zum Offenlegen eines IMS-Überwachungsereignisses gemäß der zweiten Anfrage zusammenhängt, *Empfangen* (709) eines Ereignisberichts, der mit dem erfassten Ereignis zusammenhängt, vom zweiten IMS-Knoten (142), und
*Senden* (710), an den CN-Knoten (131) über die zweite SBI (Nxy), des Ereignisberichts, der mit dem erfassten Ereignis zusammenhängt, der über die erste SBI (Nxx) an den Netzwerkknoten (132) weitergeleitet werden soll.

11. Verfahren, das von einem zweiten Internetprotokoll-Multimediasystem-, IMS, Knoten (142) durchgeführt wird, zum Bearbeiten eines Offenlegungsabonnements eines IMS-Überwachungsereignisses in einem Kommunikationsnetz (100), wobei das Verfahren Folgendes umfasst:
*Registrieren* (801) in einem ersten IMS-Knoten (141) für eine IMS-Kennung für eine Benutzerausrüstung, UE (120),
*Empfangen* (802) einer zweiten Anfrage vom ersten IMS-Knoten (141), die ein Abonnement anfragt, um das IMS-Überwachungsereignis für die UE (120) in einem IMS-Netzwerk (102) offenzulegen,
wobei die zweite Anfrage eine erste ID, die einen Typ des Überwachungsereignisses identifiziert, eine dritte ID, die die UE (120) identifiziert, und eine oder mehrere der folgenden angibt: eine vierte ID, die einen CN-Knoten (131) identifiziert, und eine fünfte ID, die den ersten IMS-Knoten (141) identifiziert, und
*Einrichten* (803) des Abonnements gemäß der zweiten Anfrage basierend auf der angegebenen ersten ID, dritten ID und einer oder mehrerer der folgenden: der vierten ID und einer fünften ID,
*Senden* (804), an den ersten IMS-Knoten (141), einer Bestätigung, dass das Abonnement gemäß der zweiten Anfrage eingerichtet wurde,
wobei das eingerichtete Abonnement gemäß der zweiten Anfrage dem zweiten IMS-Knoten (142) ermöglicht, wenn irgendein Ereignis, das mit dem eingerichteten Abonnement gemäß der zweiten Anfrage zusammenhängt, erfasst wird, einen Ereignisbericht durch eines des Folgenden zu senden:
- durch direktes Melden an den CN-Knoten (131) über eine dritte dienstbasierte Schnittstelle, SBI, (Nxz), basierend auf der vierten ID, und
- durch indirektes Melden an den CN-Knoten (131) über den ersten IMS-Knoten (141), basierend auf der fünften ID.

12. Verfahren nach Anspruch 11, wobei das Verfahren ferner umfasst:
*Erfassen* (805) eines Ereignisses, das mit dem eingerichteten Abonnement gemäß der zweiten Anfrage zusammenhängt,
*Senden* (806) eines Ereignisberichts, der mit dem erfassten Ereignis zusammenhängt, wobei der Ereignisbericht an eines oder mehrere der folgenden gesendet wird:
- den CN-Knoten (131) über die dritte SBI (Nxz), und
- den ersten IMS-Knoten (141), wobei der Ereignisbericht über die zweite SBI (Nxy) an den CN-Knoten (131) weitergeleitet werden soll.

13. Kernnetzwerk-, CN, Knoten (131), der dazu konfiguriert ist, ein Offenlegungsabonnement eines Internetprotokoll-Multimediasystem-, IMS, Überwachungsereignisses in einem Kommunikationsnetzwerk (100) zu bearbeiten, wobei der CN-Knoten (131) ferner für Folgendes konfiguriert ist:
*Empfangen* von einem Netzwerkknoten (132) über eine erste dienstbasierte Schnittstelle, SBI, (Nxx), einer Anfrage für ein Abonnement, um ein IMS-Überwachungsereignis für eine Benutzerausrüstung, UE, (120) in einem IMS-Netzwerk (102) offenzulegen, wobei die Anfrage dazu ausgelegt ist, eine erste ID, die einen Typ des Überwachungsereignisses identifiziert, eine zweite ID, die den Netzwerkknoten (132) identifiziert, und eine dritte ID, die die UE (120) identifiziert, anzugeben,
*Senden*, über eine zweite SBI (Nxy) an einen ersten IMS-Knoten (141), der Anfrage für das Abonnement, wobei die Anfrage dazu ausgelegt ist, die erste ID, die zweite ID, die dritte ID und eine vierte ID, die den CN-Knoten (131) identifiziert, anzugeben,
*Empfangen* einer Bestätigung, dass das angeforderte Abonnement basierend auf der ersten ID, der zweiten ID, der dritten ID und der vierten ID eingerichtet wurde,
*Senden*, an den Netzwerkknoten (132), der Bestätigung, dass das angeforderte Abonnement eingerichtet wurde, und
wobei das eingerichtete Abonnement dazu ausgelegt ist, dem ersten IMS-Knoten (141) zu ermöglichen, einen Ereignisbericht über die zweite SBI (Nxy) an den CN-Knoten (131) basierend auf der vierten ID zu senden, wenn irgendein Ereignis erfasst wird, das mit dem eingerichteten Abonnement zusammenhängt, wobei dieser Ereignisbericht über die erste SBI (Nxx) an den Netzwerkknoten (132) weitergeleitet werden soll.

14. Erster Internetprotokoll-Multimediasystem-, IMS, Knoten (141), der dazu konfiguriert ist, ein Offenlegungsabonnement IMS-Überwachungsereignisses in einem Kommunikationsnetzwerk (100) zu bearbeiten, wobei der IMS-Knoten (141) ferner für Folgendes konfiguriert ist:
*Empfangen*, über eine zweite dienstbasierte Schnittstelle, SBI, (Nxy), einer Anfrage von einem Kernnetzwerk-, CN, Knoten (131), die ein Abonnement anfragt, um das IMS-Überwachungsereignis für eine Benutzerausrüstung, UE, (120) in einem IMS-Netzwerk (102) offenzulegen, wobei die Anfrage dazu ausgelegt ist, von einem Netzwerkknoten (132) zu stammen, wobei die Anfrage dazu ausgelegt ist, eine erste ID, die einen Typ des Überwachungsereignisses identifiziert, eine zweite ID, die den Netzwerkknoten (132) identifiziert, eine dritte ID, die die UE (120) identifiziert, und eine vierte ID, die den CN-Knoten (131) identifiziert, anzugeben,
*Einrichten* des angefragten Abonnements basierend auf der ersten ID, der zweiten ID, der dritten ID und einer vierten ID,
*Senden*, an den CN-Knoten (131) über die zweite SBI (Nxy), einer Bestätigung, dass das angeforderte Abonnement eingerichtet wurde, wobei die Bestätigung an den Netzwerkknoten (132) weitergeleitet werden soll, und
wobei das Einrichtungsabonnement dazu ausgelegt ist, dem ersten IMS-Knoten (141) zu ermöglichen, einen Ereignisbericht über die zweite SBI (Nxy) an den CN-Knoten (131) basierend auf der vierten ID zu senden, wenn ein Ereignis erfasst wird, das mit dem Einrichtungsabonnement zusammenhängt, wobei dieser Ereignisbericht über eine erste SBI (Nxx) an den Netzwerkknoten (132) weitergeleitet werden soll.

15. Zweiter Internetprotokoll-Multimediasystem-, IMS, Knoten (142), der dazu konfiguriert ist, ein Offenlegungsabonnement IMS-Überwachungsereignisses in einem Kommunikationsnetzwerk (100) zu bearbeiten, wobei der IMS-Knoten (142) ferner für Folgendes konfiguriert ist:
*Registrieren* in einem ersten IMS-Knoten (141) für eine IMS-Kennung für eine Benutzerausrüstung, UE (120),
*Empfangen* einer zweiten Anfrage vom ersten IMS-Knoten (141), die ein Abonnement anfragt, um das IMS-Überwachungsereignis für die UE (120) in einem IMS-Netzwerk (102) offenzulegen,
wobei die zweite Anfrage dazu ausgelegt ist, eine erste ID, die einen Typ des Überwachungsereignisses identifiziert, eine dritte ID, die die UE (120) identifiziert, und eine oder mehrere der folgenden anzugeben: eine vierte ID, die einen CN-Knoten (131) identifiziert, und eine fünfte ID, die den ersten IMS-Knoten (141) identifiziert, und
*Einrichten* des Abonnements gemäß der zweiten Anfrage basierend auf der angegebenen ersten ID, dritten ID und einer oder mehrerer der folgenden: der vierten ID und einer fünften ID,
*Senden* , an den ersten IMS-Knoten (141), einer Bestätigung, dass das Abonnement gemäß der zweiten Anfrage eingerichtet wurde,
wobei das eingerichtete Abonnement gemäß der zweiten Anfrage dazu ausgelegt ist, dem zweiten IMS-Knoten (142) zu ermöglichen, wenn irgendein Ereignis, das mit dem eingerichteten Abonnement gemäß der zweiten Anfrage zusammenhängt, erfasst wird, einen Ereignisbericht durch eines des Folgenden zu senden:
- durch direktes Melden an den CN-Knoten (131) über eine dritte dienstbasierte Schnittstelle, SBI, (Nxz), basierend auf der vierten ID, und
- durch indirektes Melden an den CN-Knoten (131) über den ersten IMS-Knoten (141), basierend auf der fünften ID.

## Revendications

1. Procédé mis en œuvre par un nœud (131) de réseau central, CN, pour gérer un abonnement d'exposition d'un événement de surveillance de système multimédia de protocole Internet, IMS, dans un réseau de communication (100), le procédé comprenant :
*la réception* (601) à partir d'un nœud de réseau (132) par l'intermédiaire d'une première interface basée sur service, SBI (Nxx), d'une demande d'abonnement pour exposer un événement de surveillance IMS pour un équipement utilisateur, UE (120), dans un réseau IMS (102), laquelle demande indique un premier ID identifiant un type de l'événement de surveillance, un deuxième ID identifiant le nœud de réseau (132) et un troisième ID identifiant l'UE (120),
*l'envoi* (602) à un premier nœud IMS (141) par l'intermédiaire d'une deuxième SBI (Nxy), de la demande pour ledit abonnement, laquelle demande indique le premier ID, le deuxième ID, le troisième ID et un quatrième ID identifiant le nœud CN (131),
*la réception* (603) d'un accusé de réception indiquant que l'abonnement demandé est configuré sur la base du premier ID, du deuxième ID, du troisième ID et du quatrième ID,
*l'envoi* (604) au nœud de réseau (132), de l'accusé de réception indiquant que l'abonnement demandé est configuré,
dans lequel l'abonnement configuré permet au premier nœud IMS (141) d'envoyer un rapport d'événement par l'intermédiaire de la deuxième SBI (Nxy), au nœud CN (131), sur la base du quatrième ID, lorsqu'un quelconque événement est détecté qui est lié à l'abonnement configuré, lequel rapport d'événement doit être transmis au nœud réseau (132) par l'intermédiaire de la première SBI (Nxx).

2. Procédé selon la revendication 1, le procédé comprenant en outre :
lorsqu'il est détecté par le premier nœud IMS (141), un événement qui est lié à l'abonnement configuré, *la réception* (605) d'un rapport d'événement à partir du premier nœud IMS (141) par l'intermédiaire de la deuxième SBI (Nxy) et
*l'envoi* (606) du rapport d'événement au nœud de réseau (132) par l'intermédiaire de la première SBI (Nxx).

3. Procédé selon l'une quelconque des revendications 1-2, dans lequel :
l'événement doit être détecté et signalé par un deuxième nœud IMS (142),
le premier nœud IMS (141) a demandé au deuxième nœud IMS (142) dans une deuxième demande de configurer l'abonnement, et
la configuration de l'abonnement demandé d'exposition de l'événement de surveillance IMS pour l'UE (120) comprend en outre l'abonnement configuré selon la deuxième demande, et
l'abonnement configuré selon la deuxième demande permet au deuxième nœud IMS (142), lorsqu'un quelconque événement qui est lié à cet abonnement configuré est détecté selon la deuxième demande, d'envoyer un rapport d'événement selon l'un quelconque parmi :
- un signalement direct au nœud CN (131) par l'intermédiaire d'une troisième SBI (Nxz), sur la base du quatrième ID, et
- un signalement indirect au nœud CN (131) par l'intermédiaire de la deuxième SBI (Nxy), et par l'intermédiaire du premier nœud IMS (141).

4. Procédé selon la revendication 3, le procédé comprenant en outre :
lorsqu'un événement est détecté par le deuxième nœud IMS (142), qui est lié à l'abonnement configuré, *la réception* (607) d'un rapport d'événement à partir du deuxième nœud IMS (142) par l'intermédiaire d'un ou de plusieurs parmi : un signalement direct à partir de la troisième SBI (Nxz), et un signalement indirect à partir du premier nœud IMS (142) par l'intermédiaire de la deuxième SBI (Nxy), et
*l'envoi* (608) du rapport d'événement au nœud de réseau (132) par l'intermédiaire de la première SBI (Nxx).

5. Procédé selon l'une quelconque des revendications 1-4, dans lequel l'un quelconque parmi :
- le nœud CN (131) est représenté par un nœud de fonction d'exposition de réseau, NEF,
- le nœud du réseau (132) est représenté par une fonction d'application, AF,
- le premier nœud IMS (141) est représenté par un nœud IMS de serveur d'abonné de rattachement, HSS,
- le deuxième nœud IMS (142) est représenté par une fonction de commande de session d'appel de service, S-CSCF,
- l'UE (120) comprend un ou plusieurs UE ou un groupe d'UE,
- le troisième ID identifiant le premier UE (120) est adapté pour comprendre une liste d'UE identifiant l'UE respectif (120) et : l'un ou les plusieurs UE (120, 122) ou UE du groupe d'UE, et
- l'événement comprend un ou plusieurs événements.

6. Procédé réalisé par un premier nœud (141) de système multimédia de protocole Internet, IMS, pour gérer un abonnement d'exposition d'un événement de surveillance IMS dans un réseau de communication (100), le procédé comprenant :
*la réception* (701) par l'intermédiaire d'une deuxième interface basée sur service, SBI (Nxy), d'une demande à partir d'un premier nœud (131) de réseau central, CN, demandant un abonnement pour exposer l'événement de surveillance IMS pour un équipement utilisateur, UE (120), dans un réseau IMS (102), laquelle demande provient d'un nœud de réseau (132), laquelle demande indique un premier ID identifiant un type de l'événement de surveillance, un deuxième ID identifiant le nœud de réseau (132), un troisième ID identifiant l'UE (120) et un quatrième ID identifiant le nœud CN (131),
*la configuration* (705) de l'abonnement demandé sur la base du premier ID, du deuxième ID, du troisième ID et d'un quatrième ID,
*l'envoi* (706) au nœud CN (131) par l'intermédiaire de la deuxième SBI (Nxy), d'un accusé de réception indiquant que l'abonnement demandé est configuré, lequel accusé de réception doit être transmis au nœud de réseau (132), et
dans lequel l'abonnement configuré permet au premier nœud IMS (141) d'envoyer un rapport d'événement par l'intermédiaire de la deuxième SBI (Nxy), au nœud CN (131), sur la base du quatrième ID, lorsqu'un quelconque événement est détecté qui est lié à l'abonnement configuré, lequel rapport d'événement doit être transmis au nœud réseau (132) par l'intermédiaire d'une première SBI (Nxx).

7. Procédé selon la revendication 6, le procédé comprenant en outre :
*la détection* (707) d'un événement qui est lié à l'abonnement configuré,
*l'envoi* (708) au nœud CN (131), par l'intermédiaire de la deuxième SBI (Nxy), d'un rapport d'événement lié à l'événement détecté, à transmettre au nœud de réseau (132), par l'intermédiaire de la première SBI (Nxx).

8. Procédé selon l'une quelconque des revendications 6-7, comprenant en outre :
*la décision* (702) que l'événement doit être détecté et signalé par un deuxième nœud IMS (142) sur la base du premier ID et de la demande d'abonnement,
lorsque le deuxième nœud IMS (142) est inscrit dans le premier nœud IMS (141) pour une identité IMS pour l'UE (120), *l'envoi* (703) d'une deuxième demande au deuxième nœud IMS (142), la demande de l'abonnement pour exposer l'événement de surveillance IMS pour l'UE (120), laquelle deuxième demande indique le premier ID, le troisième ID et un quelconque ou plusieurs parmi : le quatrième ID et un cinquième ID identifiant le premier nœud IMS (141), et
*la réception* (704) à partir du deuxième nœud IMS (142) d'un accusé de réception indiquant que l'abonnement selon la deuxième demande est configuré sur la base du premier ID indiqué, du troisième ID et d'un quelconque ou de plusieurs parmi : quatrième ID et cinquième ID,
et dans lequel la *configuration* (705) de l'abonnement demandé d'exposition de l'événement de surveillance IMS pour l'UE (120) comprend en outre l'abonnement configuré selon la deuxième demande.

9. Procédé selon la revendication 8, dans lequel l'abonnement configuré selon la deuxième demande permet au deuxième nœud IMS (142), lorsqu'un quelconque événement qui est lié à cet abonnement configuré est détecté selon la deuxième demande, d'envoyer un rapport d'événement à l'un quelconque parmi :
un signalement direct au nœud CN (131) par l'intermédiaire d'une troisième SBI (Nxz), sur la base du quatrième ID, et
un signalement indirect au nœud CN (131), par l'intermédiaire du premier nœud IMS (141) sur la base du cinquième ID.

10. Procédé selon la revendication 9, le procédé comprenant en outre :
lorsqu'un événement est détecté par le deuxième nœud IMS (142) qui est lié à l'abonnement configuré pour exposer l'événement de surveillance IMS selon la deuxième demande, *la réception* (709) d'un rapport d'événement lié à l'événement détecté à partir du deuxième nœud IMS (142), et
*l'envoi* (710) au nœud CN (131), par l'intermédiaire de la deuxième SBI (Nxy), du rapport d'événement lié à l'événement détecté, à transmettre au nœud de réseau (132), par l'intermédiaire de la première SBI (Nxx).

11. Procédé réalisé par un deuxième nœud (142) de système multimédia de protocole Internet, IMS, pour gérer un abonnement d'exposition d'un événement de surveillance IMS dans un réseau de communication (100), le procédé comprenant :
*l'inscription* (801) dans un premier nœud IMS (141) pour une identité IMS pour un équipement utilisateur, UE (120),
*la réception* (802) d'une deuxième demande à partir du premier nœud IMS (141) demandant un abonnement pour exposer l'événement de surveillance IMS pour l'UE (120) dans un réseau IMS (102),
laquelle deuxième demande indique un premier ID identifiant un type de l'événement de surveillance, un troisième ID identifiant l'UE (120), et un quelconque ou plusieurs parmi : un quatrième ID identifiant un nœud CN (131), et un cinquième ID identifiant le premier nœud IMS (141), et
*la configuration* (803) de l'abonnement selon la deuxième demande sur la base du premier ID, troisième ID indiqué et d'un ou de plusieurs parmi : le quatrième ID et un cinquième ID,
*l'envoi* (804) au premier nœud IMS (141) d'un accusé de réception indiquant que l'abonnement selon la deuxième demande est configuré,
dans lequel l'abonnement configuré selon la deuxième demande permet au deuxième nœud IMS (142), lorsqu'un quelconque événement qui est lié à cet abonnement configuré est détecté selon la deuxième demande, d'envoyer un rapport d'événement à l'un quelconque parmi :
- un signalement direct au nœud CN (131) par l'intermédiaire d'une troisième interface basée sur service, SBI (Nxz), sur la base du quatrième ID, et
- un signalement indirect au nœud CN (131) par l'intermédiaire du premier nœud IMS (141), sur la base du cinquième ID.

12. Procédé selon la revendication 11, le procédé comprenant en outre :
*la détection* (805) d'un événement qui est lié à l'abonnement configuré selon la deuxième demande,
*l'envoi* (806) d'un rapport d'événement lié à l'événement détecté, lequel rapport d'événement est envoyé à l'un quelconque ou aux plusieurs parmi :
- le nœud CN (131) par l'intermédiaire de la troisième SBI (Nxz), et
- le premier nœud IMS (141) dont le rapport d'événement doit être transmis au nœud CN (131) par l'intermédiaire de la deuxième SBI (Nxy).

13. Nœud de réseau central, CN (131), configuré pour gérer un abonnement d'exposition à un événement de surveillance de système multimédia de protocole Internet, IMS, dans un réseau de communication (100), le nœud CN (131) étant en outre configuré pour :
*la réception* à partir d'un nœud de réseau (132) par l'intermédiaire d'une première interface basée sur service, SBI (Nxx), d'une demande d'abonnement pour exposer un événement de surveillance IMS pour un équipement utilisateur, UE (120), dans un réseau IMS (102), laquelle demande est adaptée pour indiquer un premier ID identifiant un type de l'événement de surveillance, un deuxième ID identifiant le nœud de réseau (132) et un troisième ID identifiant l'UE (120),
*l'envoi* à un premier nœud IMS (141) par l'intermédiaire d'une deuxième SBI (Nxy), de la demande pour ledit abonnement, laquelle demande est adaptée pour indiquer le premier ID, le deuxième ID, le troisième ID et un quatrième ID identifiant le nœud CN (131),
*la réception* d'un accusé de réception indiquant que l'abonnement demandé est configuré sur la base du premier ID, du deuxième ID, du troisième ID et du quatrième ID,
*l'envoi* au nœud de réseau (132), de l'accusé de réception indiquant que l'abonnement demandé est configuré, et
dans lequel l'abonnement configuré est adapté pour permettre au premier nœud IMS (141) d'envoyer un rapport d'événement par l'intermédiaire de la deuxième SBI (Nxy) au nœud CN (131) sur la base du quatrième ID, lorsqu'un quelconque événement est détecté qui est lié à l'abonnement configuré, lequel rapport d'événement doit être transmis au nœud réseau (132) par l'intermédiaire de la première SBI (Nxx).

14. Premier nœud (141) de système multimédia de protocole Internet, IMS, configuré pour gérer un abonnement d'exposition d'un événement de surveillance IMS dans un réseau de communication (100), le nœud IMS (141) étant en outre configuré pour :
*recevoir* par l'intermédiaire d'une deuxième interface basée sur service, SBI (Nxy), d'une demande à partir d'un nœud (131) de réseau central, CN, demandant un abonnement pour exposer l'événement de surveillance IMS pour un équipement utilisateur, UE (120), dans un réseau IMS (102), laquelle demande est adaptée pour provenir d'un nœud de réseau (132), laquelle demande est adaptée pour indiquer un premier ID identifiant un type de l'événement de surveillance, un deuxième ID identifiant le nœud de réseau (132), un troisième ID identifiant l'UE (120) et un quatrième ID identifiant le nœud CN (131),
*la configuration* de l'abonnement demandé sur la base du premier ID, du deuxième ID, du troisième ID et d'un quatrième ID,
*l'envoi* au nœud CN (131) par l'intermédiaire de la deuxième SBI (Nxy), d'un accusé de réception indiquant que l'abonnement demandé est configuré, lequel accusé de réception doit être transmis au nœud de réseau (132), et
dans lequel l'abonnement configuré est adapté pour permettre au premier nœud IMS (141) d'envoyer un rapport d'événement par l'intermédiaire de la deuxième SBI (Nxy), au nœud CN (131), sur la base du quatrième ID, lorsqu'un événement est détecté qui est lié à l'abonnement configuré, lequel rapport d'événement doit être transmis au nœud réseau (132) par l'intermédiaire d'une première SBI (Nxx).

15. Deuxième nœud (142) de système multimédia de protocole Internet, IMS, configuré pour gérer un abonnement d'exposition d'un événement de surveillance IMS dans un réseau de communication (100), le nœud IMS (142) étant en outre configuré pour :
*l'inscription* dans un premier nœud IMS (141) pour une identité IMS pour un équipement utilisateur, UE (120),
*la réception* d'une deuxième demande à partir du premier nœud IMS (141) demandant un abonnement pour exposer l'événement de surveillance IMS pour l'UE (120) dans un réseau IMS (102),
laquelle deuxième demande est adaptée pour indiquer un premier ID identifiant un type de l'événement de surveillance, un troisième ID identifiant l'UE (120), et un quelconque ou plusieurs parmi : un quatrième ID identifiant un nœud CN (131), et un cinquième ID identifiant le premier nœud IMS (141) et
*la configuration* de l'abonnement selon la deuxième demande sur la base du premier ID, troisième ID indiqué et d'un ou de plusieurs parmi : le quatrième ID et un cinquième ID,
*l'envoi* au premier nœud IMS (141) d'un accusé de réception indiquant que l'abonnement selon la deuxième demande est configuré,
dans lequel l'abonnement configuré selon la deuxième demande est adapté pour permettre au deuxième nœud IMS (142), lorsqu'un quelconque événement qui est lié à cet abonnement configuré est détecté selon la deuxième demande, d'envoyer un rapport d'événement à l'un quelconque parmi :
- un signalement direct au nœud CN (131) par l'intermédiaire d'une troisième interface basée sur service, SBI (Nxz) sur la base du quatrième ID, et
- un signalement indirect au nœud CN (131) par l'intermédiaire du premier nœud IMS (141) sur la base du cinquième ID.
